(19) Europäisches Patentamt

European Patent Office

Office européen des brevets

(11) **EP 0 995 495 A1**

(12) **EUROPEAN PATENT APPLICATION**

(43) Date of publication:
26.04.2000 Bulletin 2000/17

(51) Int. Cl.⁷: **B03C 3/14**, B03C 3/145,
B01D 53/32, C03B 3/02,
B01J 19/08, B01D 53/08,
B01D 53/50, B01D 53/68,
B01D 53/86

(21) Application number: 99308244.5

(22) Date of filing: 19.10.1999

(84) Designated Contracting States:
AT BE CH CY DE DK ES FI FR GB GR IE IT LI LU
MC NL PT SE
Designated Extension States:
AL LT LV MK RO SI

(30) Priority: 20.10.1998 GB 9822755

(71) Applicant: THE BOC GROUP, INC.
Murray Hill, New Providence, New Jersey 07974-2082 (US)

(72) Inventor: Alexander, Jeffrey Carl
Lamberhurst, Kent TN3 8BH (GB)

(74) Representative:
MacLean, Martin David et al
The BOC Group plc,
Chertsey Road
Windlesham, Surrey GU20 6HJ (GB)

(54) **Electrostatic control for contact between gases and solid particles**

(57) A method and apparatus for promoting direct contact between flowing gases 9 and solid particles 15. The particles are subjected to electrostatic forces in a way that allows the gases and solid particles 34 to flow in countercurrent directions, even at high gas velocities, with virtually no carryover of fine particles in the outgoing gases 14. Time alternating electrostatic forces are imposed by means of a high voltage power supply 4, corona discharge electrode 3, and electrically grounded surface 8, resulting in reciprocating particle motion that enhances the gas to solid contact, and thus the heat and mass transfer rates.

FIG. 1A.

## Description

The present invention relates to the art of promoting direct contact between gases and solids. Many industrial processes utilise direct contact between gases and solids to achieve heat and/or mass transfer. Typical applications include:

1. Drying, where hot gases remove free moisture from wet solids, examples being coal, sand, other minerals, grain, corn, seaweed, etc.

2. Dehydration, where hot gases remove chemically bound moisture from solids, examples being Glaubers salt, black azo dye, zinc sulphate, magnesium hydroxide.

3. Calcining, where hot gases chemically decompose some constituents of a solid, examples being petroleum coke, lime production (from limestone, magnesite and dolomite).

4. Catalytic reactions, where solid catalysts augment chemical reactions in the gas, examples being fluid bed catalytic petroleum crackers, Vanadium pentoxide catalytic reduction of NOx to N2 for flue gas cleaning.

5. Chemical reactions, where solids chemically react with constituents of the gas, examples being dry scrubbing for flue gas cleaning (where reactive sorbent powders are injected into the gas stream), fluidized bed combustion where sulphur in the fuel reacts with limestone granules, moving bed reactors such as limestone capture of HF from brick furnace exhaust gases.

6. Adsorption processes, where gas constituents are physically adsorbed on solid surfaces, such as adsorption of HF on alumina in exhaust gases from Hall-Heroult electrolytic cells for aluminum manufacture, dioxine and heavy metal adsorption on activated charcoal.

7. Solid material preheating, where heat from process exhaust gases is used to preheat process raw material feedstock, examples being Humboldt preheaters for cement kilns, glass batch and cullet preheaters using furnace exhaust gases.

Many different techniques for contacting gases and solids have evolved for the countless industrial applications. From experience of these it is well accepted that an ideal reactor would have the following properties:

1. High velocity gas flow, so large volumes of gases can be treated in reasonably sized equipment.

2. Small solid particle size, so a large surface area for heat and mass transfer is realised.

3. High "slip" velocity, that is the relative velocity of the gas to the solid. This promotes high heat and mass transfer rates.

4. Good mixing between the gas and solids for optimum process efficiency.

5. Low gas pressure drops, for low operating costs (associated with fans and blowers)

6. Countercurrent flow of gas and solids, for maximum process efficiency. For example, in a preheating device, a Countercurrent design would allow the exiting solids to be at or near the entering gas temperature, with the exiting gas at or near the entering solids temperature.

7. No generation of dust, to eliminate the need for downstream dust filtration equipment.

8. High efficiency capture of particulate matter from the inlet gas stream. Many industrial gas streams contain substantial quantities of particulate matter which must ultimately be effectively captured before their discharge to atmosphere.

To date, gas-solid contact devices have not achieved all of these criteria.

Due to the numerous examples of techniques for contacting gases and solids, a complete review is beyond the scope of this patent application. Furthermore, none of the known examples exhibit substantial similarities to the present invention. However, it is useful to review the fundamentals of existing techniques, if for no other reason than to exemplify the advantages of the present invention. Typical gas-solid contact devices are:

1. Fluidized beds where gases are drawn vertically upwards through beds of solids at velocities sufficient to levitate the particles and put them into a "fluidized" state.

    a) Advantages

        i) Excellent gas-solid mixing
        ii) Moderate gas velocities
        iii) Moderate slip velocities

    b) Disadvantages

        i) Relatively large particle sizes required
        ii) Relatively high pressure drops
        iii) Not countercurrent, solids temperature is generally the same as the exiting gas temperature.
        iv) Virtually no particulate capture
        v) Large generation of dust

2. Moving bed reactors, where gases flow through slowly moving beds of solid granules. Flow direction may be either cross-flow (horizontal gas flow with vertical downward solids motion), or countercurrent (vertical up gas flow with vertical down solids flow). Examples of this are activated carbon beds for adsorption of dioxine from municipal solid waste.

a) Advantages

    i) Can achieve countercurrent design
    ii) With low gas velocities, dusting can be kept at a minimum
    iii) With electrostatic augmentation, high efficiency particulate capture can be achieved

b) Disadvantages

    i) Large particle sizes required
    ii) Moderate (cross-flow) to high (countercurrent) pressure drops
    iii) Low slip velocity
    iv) Low to moderate gas velocities

3. Entrainment Reactors, where particles are entrained in a vertical upward gas flow and particles are separated from the gas in a downstream filtration system. When a cyclone is used and the separated particles are recirculated, the process is known as a Circulating Fluidized Bed. An example of this are Humboldt process raw material preheaters for cement kilns.

a) Advantages

    i) High gas velocity
    ii) Good mixing
    iii) Small particle sizes

b) Disadvantages

    i) Moderate pressure drops (due to filtration system)
    ii) Dust generation
    iii) No particulate capture
    iv) Not countercurrent, unless multiple stages are utilised.
    v) Low slip velocity

4. Rotating Kilns where solids are moved through a horizontal (or slightly inclined) rotating tube. Gases are also flowed through the tube. Baffles can be used to lift and drop the solids through the gases. Kilns for calcination of limestone or production of cement are typical examples.

a) Advantages

    i) Countercurrent flow can be achieved
    ii) Low pressure drop
    iii) Can use high gas velocities, if large particles are employed
    iv) Can use small particles, if low gas velocities are employed
    v) Good mixing

b) Disadvantages

    i) Very large generation of dust
    ii) No particulate capture
    iii) Low slip velocity
    iv) Expensive and large

5. Falling "Cloud" Reactors where solid particles are dropped into a chamber with gases flowing vertically upward at very low velocities so that particles can fall through by gravity.

a) Advantages

    i) Countercurrent flow
    ii) Low gas pressure drop
    iii) Simple design

b) Disadvantages

    i) Low gas velocities required
    ii) Large particle size required
    iii) Poor mixing
    iv) Generation of dust
    v) Low slip velocity
    vi) Little or no capture of particulate mailer

It is an object of the present invention to provide methods and apparatus for promoting contact between gases (where used herein, the term "gases" encompasses substantially pure gas as well as gas mixtures) and solid particles which have the properties of an ideal reactor as set out above.

Accordingly, the present invention provides a method for promoting contact between gases and solid particles comprising the steps of:

    a) Providing an electrically conductive discharge electrode located adjacent to and spaced from an electrically conductive collection electrode, the discharge electrode generally including sharp or small radius surfaces conducive to production of corona discharge;
    b) Introducing gases to the space between the electrodes;
    c) Introducing solid particles to the space between the electrodes;
    d) Applying an electric potential difference between the two electrodes of sufficient magnitude to produce corona discharge in the space between the two electrodes for a finite amount of time, to cause the particles to move toward the collection electrode;
    e) Reducing the electric potential difference to a magnitude less than that required to produce corona discharge for a finite amount of time, to cause the particles to move away from the collection electrode;

f) Repeating steps d) and e) in an alternating fashion so that the particles are caused to move towards and away from the collection electrode, such motion enhancing their contact with the gases;

g) Removing gases from the space between the electrodes; and

h) Removing solid particles from the space between the electrodes.

The invention also provides apparatus for promoting contact between gases and solid particles, comprising:

a) an electrically conductive discharge electrode located adjacent to an electrically conductive collection electrode, the discharge electrode generally including sharp or small radius surfaces conducive to production of corona discharge;

b) means for introducing gases to the space between the electrodes;

c) means for removing gases from the space between the electrodes;

d) means for introducing solid particles to the space between the electrodes;

e) means for removing solid particles from the space between the electrodes;

f) means for applying an electric potential difference between the two electrodes of sufficient magnitude to produce corona discharge in the space between the two electrodes, thereby causing the particles to move toward the collection electrode;

g) Means to periodically reduce the electric potential difference to a magnitude less than that required to produce corona discharge for a finite amount of time thereby causing the particles to move away from the collection electrode and then restore the electric potential to a magnitude sufficient to produce corona discharge.

In view of the foregoing, embodiments of the present invention have these advantages:

1. They provide direct contact between solids and gases for the purpose of any or all of the following: drying, dehydration, calcining, catalytic reaction, chemical reaction, adsorption, material heating or cooling.

2. They simultaneously eliminate carryover of dust with the gases leaving the process.

3. They simultaneously collect fine particulate matter which might be carried in with the incoming gases, thus achieving reduction of a pollutant emission.

4. They simultaneously collect gaseous pollutants, which might be components of the incoming gas, by chemical reaction with the solid particles and formation of a solid reaction product.

5. They simultaneously collect gaseous pollutants, which might be components of the incoming gas, by adsorption onto the solid particles.

6. They simultaneously transform gaseous pollutants, which might be components of the incoming gas, into non-pollutant forms by chemical reaction with the solid particles acting as catalyst.

7. They optimise efficiency of the process by operating with high gas velocity, small particle size, high "slip velocity", good mixing, low gas pressure drop, and countercurrent flow of gas and solids.

One application of the present invention is to provide a method and apparatus for preheating glass batch material utilising waste heat from a glass melting furnace exhaust gases. It is a further object or benefit of such embodiments of the present invention simultaneously to collect acidic gases and particulate pollutants from the exhaust gases.

Another application of the present invention is to provide a dry method and apparatus for removing acidic gases, including sulfur oxides, from combustion exhaust gases by contact with solid particles of a scrubbing medium comprising a material selected from the group of mono, bi, and trivalent metal carbonates, bicarbonates, and oxides, including calcium carbonate. It is a further object or benefit of such embodiments of the present invention simultaneously to capture particulate matter from the exhaust gases.

Another application of the present invention is to provide a method and apparatus for collection of high electrical resistivity dusts from exhaust gases by electrostatic precipitation using low or medium resistivity solid particles as recycled additives.

One aspect of the present invention is directed to a method or process for promoting contact between solid particles and gases which includes the following steps:

a) providing a smooth surfaced electrically conductive collection electrode which is essentially vertically oriented.

b) providing an electrically conductive discharge electrode which has relatively small radiused surfaces.

c) applying an electrical potential difference between the two aforementioned electrodes of sufficient magnitude to cause the flow of gaseous ions from the discharge and towards the collection electrode, generally known as corona discharge.

d) introducing solid particles to the region between the two electrodes.

e) introducing gases to the region between the two electrodes.

f) periodically reducing the electric potential difference to a level below that which creates the corona discharge.

g) removing the solid particles from the region between the two electrodes

h) removing the gases from the region between the two electrodes.

Another aspect of the present invention is directed to an apparatus for carrying out the foregoing process.

The collection electrode may be a circular cylindrical tube and the discharge electrode a wire.

Fine dust pollutants in the gases can be removed from the gases and removed from the region along with the solid particles.

Gaseous pollutants introduced with the gases may be chemically reacted with the solid particles to form a solid reaction product which is removed from the region with the solid particles.

Heat from the gases may be transferred to the solid particles.

The gases may be introduced to the region near its bottom and removed from its top, the solids are introduced near the top and removed from the bottom so that the gas and solids flow in directions countercurrent to each other.

The gases can flow at velocities greater than the terminal velocity of the solid particles.

The periodic reduction of potential difference may suitably be achieved by a spark gap device.

The invention will now be described by way of example and with reference to the accompanying drawings, in which:

FIG. 1A and FIG 1B are sectional views showing an embodiment of an apparatus in accordance with the invention;

FIG. 2 is a plot of electrical current density vs. applied potential difference for a typical corona discharge;

FIG. 3 is magnified sectional view of a portion of the preferred embodiment of the apparatus showing details of the particle layer;

FIG. 4A and FIG. 4B are diagrammatic representations of an experimental demonstration of the electromechanical "pith ball" effect;

FIG. 5A, FIG. 5B, FIG. 5C, and FIG. 5D are magnified sectional views of a portion of the apparatus of Figure 1 showing sequential details of the forces on and the motion of the particles;

FIG. 6 is a plot of electrical potential difference and current density vs. time for the output electrical power from the high voltage switch;

FIG. 7A, FIG. 7B, and FIG. 7C are extremely magnified views of the contact points between particles conducting electrical current, shown at differing particle separations;

FIG. 8A, FIG. 8B, FIG. 8C and FIG. 8D are functional schematic views of the sequential operation of the high voltage switch;

FIG. 9 is a plot of gas velocity vs. radial position inside of the tube;

FIG. 10 is a detail view of particle trajectories inside of the tube;

FIG. 11A, FIG. 11B, FIG. 11C and FIG. 11D are magnified sectional views of a portion of the apparatus of Figure 1 showing sequential details of the deposition of fine dust onto particles;

FIG. 12 is a sectional view of another embodiment of an apparatus in accordance with the invention including a fluid to fluid heat exchanger;

FIG. 13 is a sectional view of a further embodiment of an apparatus in accordance with the invention for large scale applications;

FIG. 14 is magnified sectional view of a portion of the apparatus of Figure 13 showing details of the particle injection scheme, and

FIG. 15 is a schematic representation of an application of a invention to the glass manufacturing process.

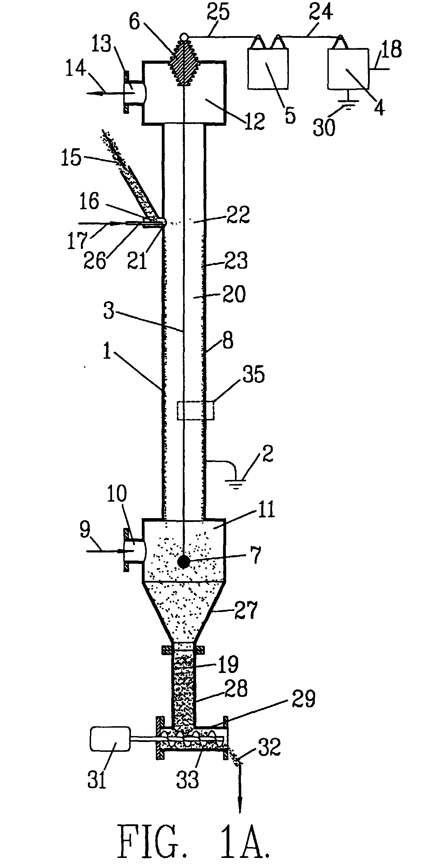

Figure 1A illustrates an embodiment of apparatus in accordance with the invention, which apparatus will be referred to as the Pulse Particle Precipitator (PPP) apparatus. In this embodiment, the PPP apparatus consists of a round cylindrical tube 1 made of electrically conductive material whose axis is vertically oriented.

Typically the tube has a diameter of about 250 mm, but other tube diameters, such as those in the range of 50 to 500 mm, may be used. The tube is connected to an electrical ground 2. A small diameter metallic wire 3 is axially oriented and centrally located within the tube. Optimally, this wire will be approximately 2 to 3 mm diameter, but diameters in the range of 0.5 to 6 mm may also be used. The wire 3 is supported from its top by insulator 6. A weight 7 is generally attached to the bottom end of the wire, to keep it in tension and centered in tube 1. This wire is connected to a high voltage DC power supply which consists of high voltage generator 4 and high voltage switch 5.

Mains power 18 is transformed into DC high voltage 24, referenced to electrical ground 30 in the generator 4, which is of conventional design. DC high voltage 24 from the generator 4 is passed through the high voltage switch 5, the function of which will be described later. The switched DC high voltage power 25 is then connected to wire 3 via feed through insulator bushing 6.

Generally, the application of high electrical potential difference between the wire 3 and tube 1 produces an electric field in the space 20 within the tube. Because the wire 3 has a small radius, the electric field concentrates near it and generates a gas plasma and produces gaseous ions. The gaseous ions are then propelled from the wire to the internal surface 8 of the tube. This flow of gaseous ions is termed corona discharge. Such an arrangement is common in the art of electrostatic precipitation.

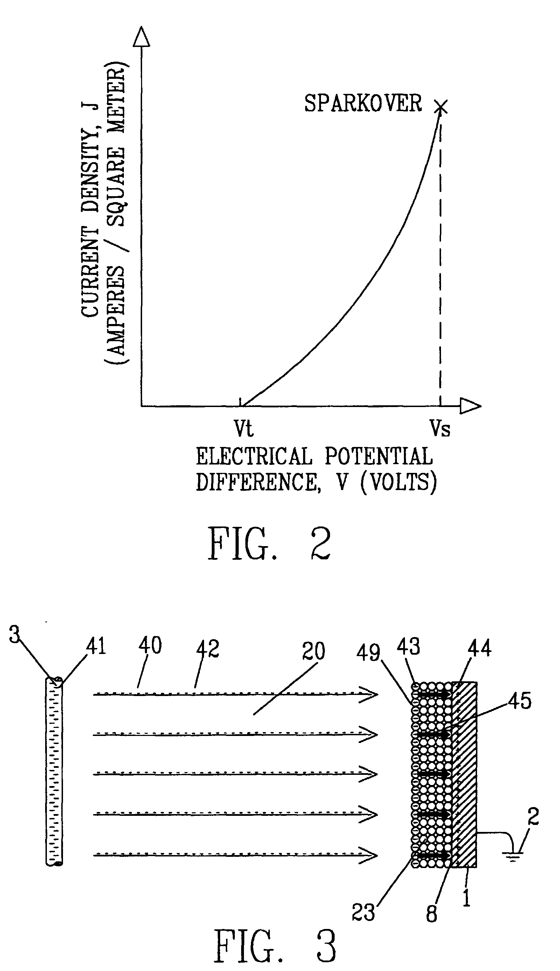

FIG. 2 is a typical graphical representation of the relationship between the potential difference **V** (as measured in volts) applied to the wire and the flow of ions through the gas. Because the ions carry electrical charges, their flow results in an electrical current density **J** (measured in amperes per square meter). Several features intrinsically characterise corona discharge in gases. First, there exists a threshold voltage $V_t$ for the flow of ions. For **V<$V_t$,** the current density **J = 0**. It should be noted that in this regime of voltage, there is still an electric field in the space 20, but there is no ion flow. Second, as voltage increases above $V_t$, the current density **J** increases monotonically and generally non-linearly. Third, there exists a sparkover voltage $V_s$. Voltages above this cannot be maintained because of electrical breakdown of the gas. The exact values of $V_t$ and $V_s$ depend upon a multitude of parameters characterising the gas stream, including chemical constituents, temperature, suspended dust loading, dust deposits on the electrodes, etc. As such it is virtually impossible to predict these with good accuracy, but fortunately they are easy to detect empirically. However, it should be understood that the exact values of $V_t$ and $V_s$ constantly vary with time.

Returning to FIG. 1A, gases 9 enter the device through port 10 to inlet plenum 11. They then flow through tube 1 from the bottom to the top and discharge into outlet plenum 12. The treated gases 14 then leave the device through port 13. Any fine particulate matter (which we shall refer as dust particles) carried by the inlet gases 9 will be electrostatically precipitated onto the internal surface 8 of the tube by means consistent with conventional electrostatic precipitator theory. It is understood that this process transpires in two steps. First, the dust particles receive electrostatic charge by impact of ions from the above described corona discharge. This step only occurs when **V>$V_t$.** Then, the charged dust particles experience a force due to the strong electric field which propels them to the inner surface 8 of the tube. This force exists when **V<$V_t$** as well as **V>$V_t$.**

In order to contact solid particles with the upward flowing gas, the solid particles 15 are introduced to the inside of the tube via an injector 16 which discharges through a hole 21 in the tube wall. Many conventional type injectors may be utilised, but in a preferred embodiment, injector 16 is a pneumatic type where a small amount of compressed air 17 passes through nozzle 26 and blows the solid particles through the hole 21. With such an injector, the rate of solid particle feed into the tube 1 can be easily controlled by varying the amount of compressed air 17. Solid particles 15 may be supplied to the injector 16 from conventional hoppers, storage silos, conveyors and the like.

If the switched high voltage power is operated so that the potential difference **V** applied to wire 3 is greater than $V_t$, the injected particles 22 are quickly deposited onto the internal walls of tube 1 by means of electrostatic precipitation with the same process as previously described for fine dust particles. The solid particles then form a layer 23 on the inner surface 8 of tube 1. It is important to note that the solid particles are precipitated onto the tube walls much faster than the fine dust particles. Their larger size allows them to acquire greater amounts of electrostatic charge and thus they are propelled more strongly towards the tube inner surface 8.

By mechanisms which will be described later, the solid particles move downward through tube 1, fail through inlet plenum 11 and are gathered by hopper 27 into pipe 28. Treated solid particles 19 can be fed out of the device by feeder 29, which can be of conventional design. In the embodiment shown, a screw auger 33 is rotated by motor 31, the speed of which controls the rate at which treated particles are discharged 32 from the device. If this rate is properly controlled, a quantity of particles 19 will be maintained in pipe 28 to act as a pressure seal so that gases in plenum 11 cannot escape the device through feeder 29.

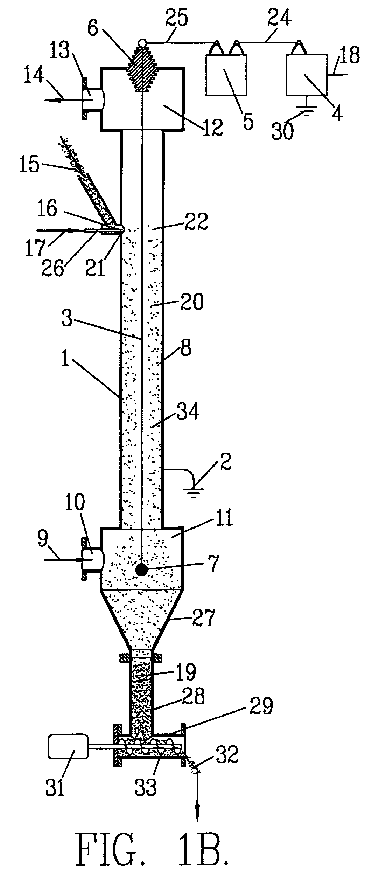

As depicted in FIG. 1B, during their downward travel through the tube 1, the particles 34 from layer 23 are periodically projected out into the flowing gases to achieve intimate contact with the upwardly flowing gases. This is achieved by operating the high voltage switch 5 so as to reduce the applied potential difference **V** to less than $V_t$. Then these particles 34 are electrostatically repelled from the inner surface 8 of tube 1. At a subsequent time, the high voltage switch 5 reverts to its original position so that **V>$V_t$** and the particles are electrostatically re-deposited to form layer 23, again as depicted in FIG 1A. The motion of particles depicted in FIG. 1A and 1B is cyclically repeated many times during typical residence time of both the gas and solid particles moving through the device.

It is a feature of the invention that the particles introduced to the interior of the tube travel downward, contacting the upwardly flowing gases in a countercurrent fashion. Without electrostatic forces, the gas flow would have two possible effects on particle motion. It is useful for further discussions to define the terminal velocity, $U_t$ of a particle in a gas stream. $U_t$ is defined as the steady state velocity that a particle will achieve when if falls through still gas under the action of gravity. Consider a particle entrained in upwardly flowing gases with velocity $U_g$. If $U_g > U_t$, the particle will move upward with velocity $U_g - U_t$. This is the normal operational mode of an entrainment reactor. If $U_g < U_t$, the particle will fall downward with velocity $U_t - U_g$. This is the normal operational mode of a falling cloud reactor. It is to be understood that larger sized particles necessarily have larger terminal velocities than smaller particles. Thus the desires for a process to operate with small particles and high gas velocities are generally at odds with one another.

Without the action of the corona discharge and electrostatic forces in the tube, particles would move about only under influence of the gas flow, which is the conventional prior art. In the above described process, the precipitation of particles onto the inner surface 8 of the tube 1 allows further control of particle motion. It has been found by the inventor that control of the corona discharge by control of the power supplied to the wire discharge electrode can cause the particles to move through the apparatus in ways not otherwise possible.

Electrostatic adhesion is now explained with reference to FIG. 3, which is a magnified view of the section 35 of FIG. 1A. When $V>V_t$, space 20 is filled with an ion current flow 40 from the corona discharge as previously described. If the voltage applied to the wire is of negative polarity, which is common in electrostatic precipitation, the wire 3 carries negative charges 41. The flowing gaseous ions 42 will also carry negative charges. It is well understood in the field of electrostatic precipitation that the ion flow 40 in the corona discharge will necessarily cause an electrical current flow through the layer of particles 23 deposited on the inner surface 8 of the tube. This current flow will necessarily create an electrical potential difference between the free exposed surface of the layer and the collection electrode, with the generation of net electrical charges. In the case of a flow of negative ions, which is most common in electrostatic precipitation, the free surface 49 of the particle layer will have negative charges 43 , while the internal surface 8 of the tube will have positive charges 44. This potential difference creates an electrostatic force 45 in the layer which makes the layer adhere to the tube inner surface 8. This adhesion force remains in effect so long as the corona discharge ion flow is maintained. This force serves both as a cohesive force in the layer 23, that is it holds the particles together, and an adhesive force, holding the layer 23 to the surface 8.

The strength of the electrostatic force depends upon the product of the current density, $J_p$ (Amperes per square meter) flowing through the particle layer and the electric field strength $E_p$ (Volts per meter) which exists in the particle layer. The current density and electric field strength in the particle layer are related by Ohms law to be:

$$E_p = \rho \times J_p,$$

where

$\rho$ is the bulk resistivity of the particle layer (ohm - meter).

It is useful to express the electrostatic adhesion force $F_p$ as:

$$F_p = \varepsilon \times E_p{}^2 ,$$

where

$\varepsilon$ is the effective dielectric constant of the particle layer (farads per meter).

Using ohms law equation to express the force in terms of current density we have:

$$F_p = \varepsilon \left( \rho \times J_p \right)^2$$

The current density $J_p$ in the particle layer is necessarily the same as the ion flow 40 current density $J_i$ from the corona discharge. Thus, so long as $V>Vt$ is applied to the wire, the electrostatic adhesion force will be present. The magnitude of force $F_p$ can be adjusted by adjusting the voltage applied to the wire 3 from the high voltage power supply 4. The corona discharge ion current density $J_i$ then varies as per FIG. 2. Because of the principle of conservation of charge, the particle layer current density $J_p$ is necessarily the same as $J_i$. The electrostatic adhesion force in the particle layer $F_p$ is then proportional to $J_p{}^2$.

The electrostatic adhesion force $F_p$ is, as shown in Figure 3, horizontal and directed towards the inner surface 8 of the tube. The particle layer also responds to the force of gravity $F_g$ which is vertically downward. If the electrostatic adhesion force is strong enough, the particle layer is pressed against the tube surface 8 to create friction which opposes the tendency of the particle layer to move downward by gravity. The total gravitational force depends upon the particle layer thickness **t**. If the friction force exceeds the gravitational force, the layer will remain fixed in place. If the friction force is decreased (by reducing the electrostatic adhesion force) or the gravitational force is increased (by increasing the layer thickness), the particle layer will move downward under gravity.

It has been found by the inventor that for particles in the size range of 50 to 500 $\mu$m diameter, and for particle layer thicknesses up to 5 mm, the particle layer adhesion force can be large enough to hold the particle layer motionless. If the current density is decreased, the particle layer thickness is increased, or the particle bulk resistivity is reduced, then the particle layer will migrate downward in a creeping fashion. The velocity of this creeping motion depends upon how much the adhesion force is reduced below that which holds the layer static. While the nominal description of the invention assumes no such downward creeping motion, it should be understood that moderate amounts of creep could still be consistent with good operation of the invention. It is the intent of the invention that the particles move downward within the tube, which is primarily achieved during the time that the particles are dispersed into the space 20. Creep during the time particles are adhered to the surface 8 still achieves the desired downward motion, but the heat and mass transfer between gas and particles during creeping downward motion is significantly less than when the particles are dispersed into space 20. Still, effective overall operation could be realised with finite amounts of creep incorporated into the design.

However, it should also be realised that with low particle bulk resistivities, only very small electrostatic adhesion forces can be achieved. In extreme cases, the gravitational and/or fluid mechanical forces on the particles can completely dominate over electrostatic adhesion. In such a case, the process could not be adequately controlled. Thus, low particle bulk resistivity can become a limitation on applicability of the invention.

In the absence of the electrostatic adhesion, particles can still be adhered to the tube by other mechanical forces, such as London van der Waals' forces, liquid capillary bridges between particles and the like. These adhesion forces depend upon the specifics of the situation such as particle size, gas composition, moisture, presence of liquid films, etc. Generally, for liquid free environments, these mechanical adhesion forces are largely dependent on particle size. It has been found by the inventor that for particles larger than about 50 $\mu$m diameter, these other adhesion forces will be negligible compared to gravitational and electrostatic forces. As will be clear from later discussions, the present invention will be premised on the use of particles where the mechanical adhesion forces are not dominant.

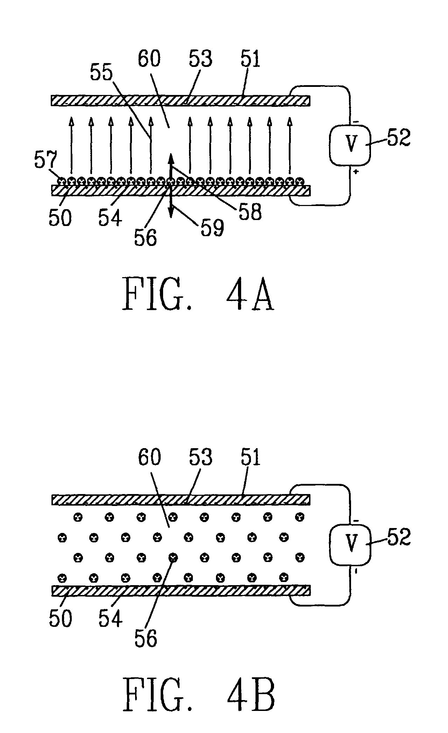

Another well known effect in the field of electromechanics is the so-called "pith-ball" effect, as depicted in FIG. 4A and FIG. 4B. Consider an electrically conductive surface 50 in proximity to a second electrically conductive surface 51 with means 52 to maintain a high electric potential difference **V** between them. If the upper surface is held at a negative potential, then negative charges 53 are induced at its surface. Positive charges 54 are then induced on the lower surface. An electric field 55 is generated in the space between the surfaces. For parallel surfaces separated by a distance **d**, the electric field strength **E** (Volts per meter) is:

$$E = V \div d$$

Generally, if the surfaces are relatively smooth, concentrations of electric field at localised points is avoided and quite high field strengths can be maintained without any creation of gaseous ions in the space. Such an electric field will be termed a "passive" electric field. It is presumed for the further analysis that this is the case.

If discrete solid particles 56 are placed in contact with the lower surface, the action of the electric field induces charge to flow between them and the lower plate so that the particles acquire electrical charges 57 of the same polarity as are on the surface, in this case positive. Such a process is called induction charging, since the charges are induced onto the particle by virtue of the imposed electric field. These positively charged particles 56 then experience repulsive forces 58 from the electrode they are in contact with. The magnitude of the force $F_e$ (for a single spherical particle of radius **a**) has been formulated by Lebedev as:

$$F_e = 4\pi\varepsilon_o a^2 E^2 \ (1.369),$$

where

    **a** is the particle radius
    $\varepsilon_0$ is the permittivity of free space( = 8.85 x $10^{-12}$ farad/meter)

In the case shown in FIG. 4A, gravity (with Newton's gravitational acceleration constant **g**) produces a force 59 which acts on each particle (of mass **m**) in a downward direction and is of magnitude $F_g$ where

$$F_g = mg.$$

If the upward electrostatic force $F_e$ is less than the gravitational force $F_g$, the particles will remain on the lower electrode. If the voltage is increased, the particles 56 experience a greater electrostatic force because they acquire additional positive charges. If the electrostatic force exceeds the gravitational force, the particles 56 will actually lift-off the electrode and be propelled toward the oppositely charged electrode surface 51. In FIG. 4B, which is a moment after the particles achieve lift off, it can be seen that the particles are repelled from the lower surface 50 and are attracted to the upper surface 51. They are also repelled from each other due to the mutual repulsion from their like electric charges, and as such they disperse quite uniformly into a cloud which fills the space between the plates and consists of the individual particles. Ultimately, they contact the upper electrode surface 53 and will lose their positive charge.

The speed at which the particles are propelled upward (by repulsion from the lower surface) depends on the difference between the repulsive force and the gravitational force. If the potential difference **V** is slowly increased, the particle will lift off when its charge level is just sufficient to counteract gravity and it will then move relatively slowly. If the potential difference can be rapidly increased, and the electrical resistance between the particle and the surface is small to allow charges to transfer (induction charging) within this rapid time, the particle can acquire charges greatly in excess of that necessary to just balance gravity and it will move rapidly. Generally for this to occur, the characteristic time of the increase in potential difference and the characteristic time of the charge transfer must be substantially less than the mechanical response time of the particle, that is the time it requires to move away from the surface.

The rate at which charge can transfer from the surface 50 to the particles 56 depends upon the electrical resistance between the two, which in turn depends upon the electrical resistivity of the materials. In general we will be concerned with surfaces necessarily made of highly conductive materials. But the particles will generally be dictated by the process to achieve various chemical activities, so their electrical resistivities will vary from application to application. Electrical resistivity can also vary with temperature, minor gas constituents and moisture, etc.

It is very important to keep in mind that this "pith ball" effect only results from the application of passive electric fields where there is no ion current flow through the gas and no current flow through the particle (or particle layers). As previously described, such a current flow would result in a cohesive force adhering the particles to the surface.

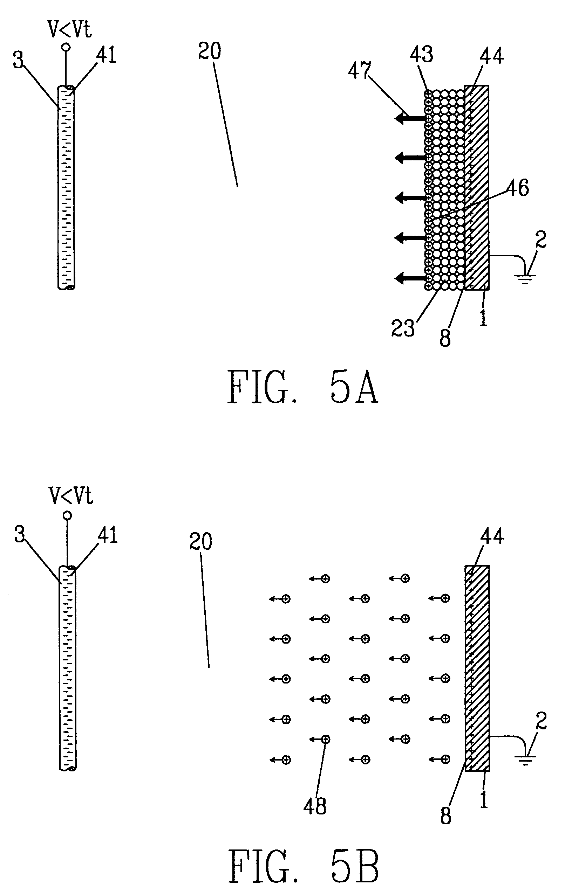

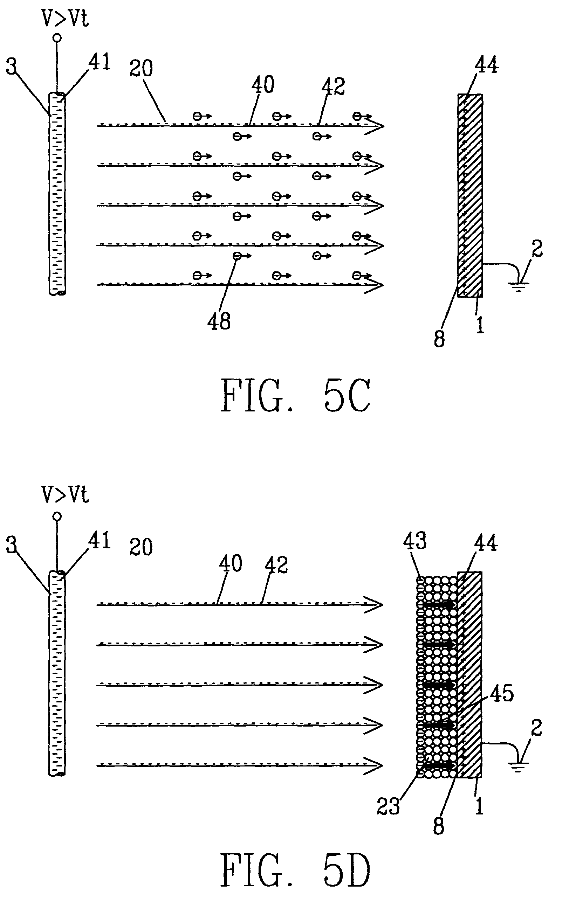

This effect can be applied to the PPP process with tremendously beneficial effects. In the PPP geometry, the inner electrode surface 8 with a layer of particles 23 is now parallel to the direction of gravity as depicted in FIG. 5A, FIG. 5B, FIG. 5C, and FIG. 5D. In place of the juxtaposed electrode surface we have the wire 3 which is held at a high potential difference to the surface 8. As we have previously described, when the potential difference $V$ is greater than the threshold of corona discharge $V_t$, we have a flow 42 of gaseous ions through the space 20 which creates a current flow in the particle layer and causes a cohesive force 45 which adheres the particles to the surface 8, as is the case in FIG. 5D.

If the potential difference is quickly reduced to a level $V<V_t$, the flow of gaseous ions, along with the flow of current through the particle layer 23, ceases. Referring to FIG. 5A which is the same system as FIG 3 shown at the instant after the voltage is reduced, positive charges 46 will be induced on the particles in the layer. This can only occur if the electrical resistivity of the particle layer is small enough and the potential difference is reduced fast enough that the particles do not have time to move substantially before the charge transfer can take place. Because of these positive charges, a force 47 exists which repels the particles from surface 8.

FIG. 5B is the same system shown at a later time. Now the particles 48, which originally formed layer 23, are repelled from the surface 8 and are attracted and move toward wire 3. As well, they are repelled from each other to form a dispersed cloud which fills the space 20 between the wire 3 and the surface 8.

FIG. 5C is the same system at a still later time. The potential difference is increased so that again $V > V_t$. This re-establishes the flow of gaseous ions 42 which cause the particles 48 in the cloud to become negatively charged by ion impact. These particles now experience electrostatic forces which move them toward the surface 8. FIG. 5D is the same system a short time later. $V$ is still greater than $V_t$, so gaseous ion flow 42 is maintained. Now the particles have all been driven to and deposited onto the surface 8 to reform the particle layer 12. As described previously, electrostatic forces 45 adhere the particle layer 23 to surface 8.

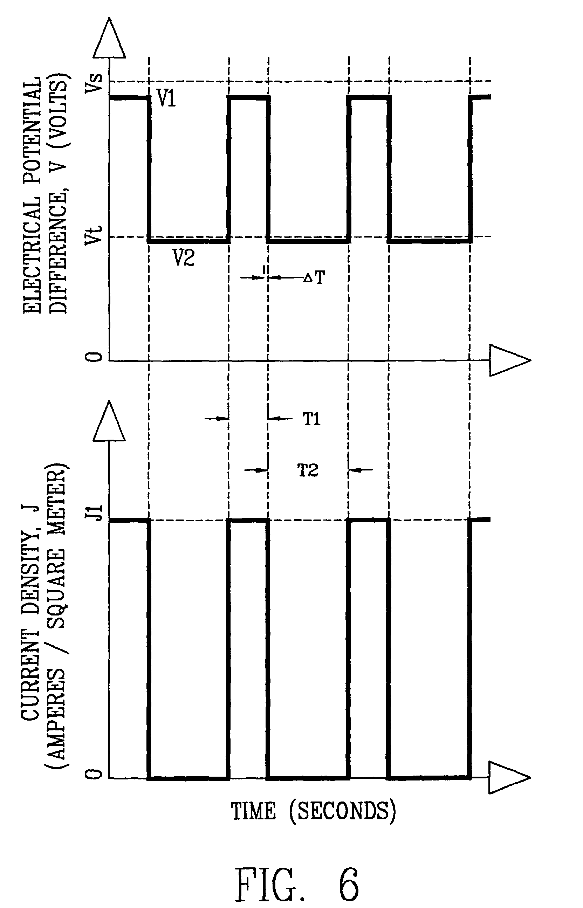

Such a process can be cyclically repeated by causing the potential difference to vary according to a square wave as shown in FIG. 6. For a time period corresponding to $T1$, the potential difference is at $V1$, which is significantly greater than $V_t$ ($V1 > V_t$) During this time the ion flow current density is $J1$. The ion flow causes the particles 48 in the dispersed cloud to become electrostatically charged with negative polarity. Particles then experience electrostatic forces which move them so that they are deposited onto surface 8. As long as

$$V=V1,$$

they are held in a particle layer 23 on the surface 8 by the electrostatic adhesion forces 45 resulting from the current density J1.

The potential difference is then quickly reduced to a level

$$V=V2$$

(where $V2 < V_t$) so that current density $J$ is reduced to $J=0$. The transition time associated with $V$ changing from $V1$ to $V2$ is called $\Delta T$. During the time $\Delta T$, the particles in the layer 23 acquire positive charges 46 by induction. It is important that $\Delta T$ be less than the time required for the particle layer to move away from surface 8, so substantial charges can be induced on the particles.

Particles are then repelled from the like charged inner surface 8 and dispersed by mutual repulsion in the space between surface 8 and wire 3 during time $T2$. It is important that wire 3 maintain a substantial potential difference from surface 8, otherwise the particles would not be strongly repelled from surface 8 and attracted to wire 3 and thus propelled into the space. Optimally, the potential difference will be reduced to a level just below $V2 \approx V_t$, so that maximum electrostatic forces are achieved.

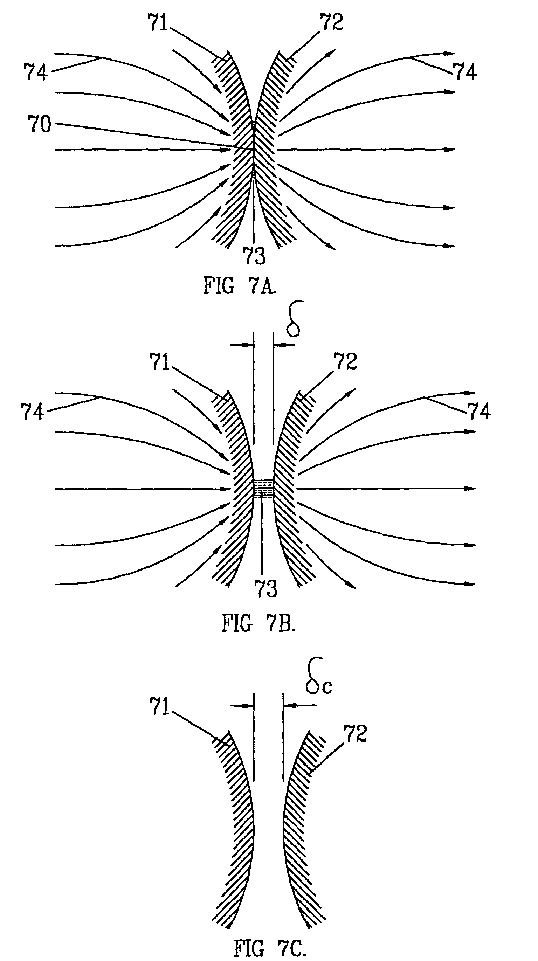

Charge transfer between particles necessarily implies electrical current flow. The passage of electrical currents through particle layers has been studied by various investigators, which is the basis for the following description. Consider FIG. 7A, which is an extremely magnified view of the contact point between two spherical particles 71 and 72. It is assumed that electrical current 74 is flowing from one particle 71, through the point of contact 70 between the particles, and to the other particle 72. Because the area of the contact point 70 becomes infinitely small, the passage of finite electrical currents 74 (amperes) would require the local current density at the contact point (amperes per square meter) to become infinitely large. Localised high current densities generate localised high electric field strengths near the contact point 70. These high electric field strengths produce a gas plasma discharge 73 around the contact point 70. This plasma provides a highly conductive path through which the current 74 can then flow with finite current density. Researchers have determined that for particles the size and resistivity of those under consideration here, the gas plasma region can have dimensions typically 1/10th the radius of the particles 71 and 72.

If electrical current is flowing between the particles and they become separated by a distance $\delta$ as shown in FIG 7B, current will continue to flow, so long as the gas plasma region 73 can be maintained. If the separation becomes too great, as in FIG. 7C, the gas plasma will extinguish, the current flow will cease, and no further charge transfer between particles 71 and 72 can take place. This is then the critical maximum separation distance $\delta_c$ of particle movement which defines the limiting times for high voltage switching and induction charging of the particles.

Determining the maximum separation, $\delta_c$, which can maintain the gas plasma is a complex function of the precise particle contact geometry, particle resistivity and the amount of current flow. However, it is reasonable to assume that the electrical contact will be maintained throughout a particle separation of about 1/10th its radius, which is the approximate size of the initial gas plasma region for particles in contact with each other as in FIG. 7A.

Next, we can calculate the time, $\tau_c$, required for particles to move by this distance, $\delta_c$. We assume that we desire the particles to acquire charges which result in the Lebedev force given above. Assuming typical values for the various parameters:

**E** = 10[5] Volts/meter, electric field strength
**a** = 10[-4] meter, particle radius
$\varepsilon_0$ = 8.85 x 10[-12] farad/meter, permittivity of free space
$\rho_p$ = 2.5 x 10[-3] kg/cubic meter, mass density of particle

and using Newton's law for motion of a particle, Force = mass x acceleration , where the mass of the particle is **$4\pi\rho_p a^3 \div 3$,** we can calculate the time required for the particle to move a certain distance. If we calculate the time required for the above specified particle to move by $\delta_c$ = 0.1 a, (that is 1/10th radius), we find it requires a time, $\tau_c \approx$ 3 milliseconds.

It is important that the induction charging of the particles, which takes place during time $\Delta$**T** of FIG. 6, be substantially completed before the particles have moved enough to extinguish the gas plasma regions which exist at their contact points. In order for charges to transfer during this time, both the switching time, $\Delta$**T,** and the charge transfer time must be less than $\tau_c$. It becomes an engineering issue to design a high voltage switch which can make the transition between **V**$_p$ and **V**$_t$ with time $\Delta$**T** < $\tau_c$ . The charge transfer time, though is dependent upon the physical nature of the particles, which are typically dictated by the process.

The charge transfer time for particle layers is usually referred to as the charge relaxation time $\tau_r$ and can be expressed as:

$\tau_r = \varepsilon\rho$, where
$\varepsilon$ is the bulk dielectric constant of the particle layer
$\rho$ is the bulk electrical resistivity.

For most materials of interest, $\varepsilon \approx$ **5**$\varepsilon_0$ , where $\varepsilon_0$ = 8.85 x 10[-12] farad/meter. If we require the charge relaxation time $\tau_r$ to be less than $\tau_c$ ,this equates to a critical particle bulk resistivity $\rho_c$ < **6.7** x 10[8] $\Omega$-meter. It is important to realise that this may be a constraint on the operability of the present invention. If the particle bulk resistivity $\rho$ is greater than $\rho_c$ , then the repulsive pith ball effect cannot be effectively realised.

Thus we have constraints for both high resistivity (charge relaxation time) and low resistivity (electrostatic adhesion force of the particle layer to the surface). While the exact value of the desired particle resistivities will vary from application to application, all applications will have some desired values of resistivity. Also, the resistivity of most materials is a function of temperature, generally resistivity increases with increasing temperatures, so the resistivity can in turn influence the required temperature parameters used for a given process. This issue warrants careful consideration for each application.

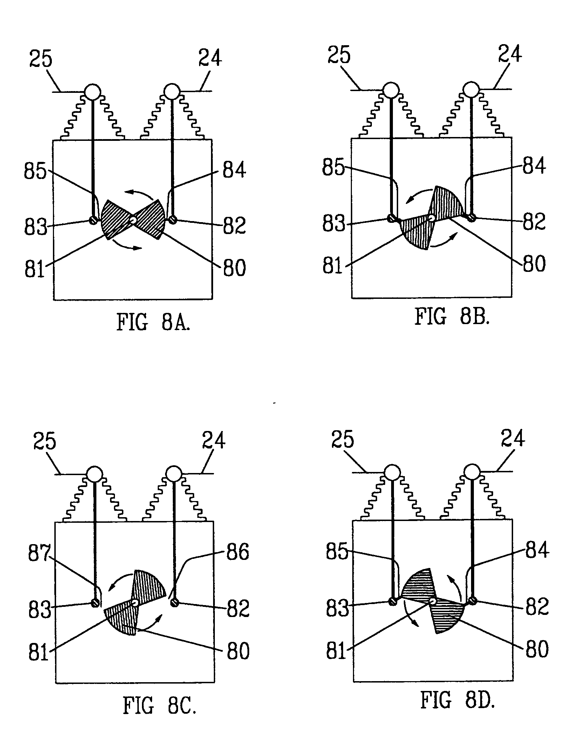

An elegant engineering solution to achieving the desired square wave form of FIG. 6 with required switching time $\Delta$**T** is a spark gap as depicted in FIG. 8A, FIG. 8B, FIG. 8C, and FIG. 8D. A conventional power supply 4 (see FIG. 1A), such as a transformer-rectifier or high frequency power switching device, receives mains power 18 and generates a constant high voltage 24 of value **V1**. An electrically conducting armature 80 is rotated on a shaft 81 between two electrode contacts 82 and 83. When the armature is in position shown in FIG. 8A, the high voltage from 24 is directly connected from terminal 82 to terminal 83 with very little voltage drop so that output voltage 25 is of value

$$V_{out} = V1.$$

The small gaps between the armature 80 the terminals 82 and 83 will be filled with gas plasma arcs 84 and 85 which provide little resistance to current flow.

When the armature is in position as depicted in FIG. 8B, the gaps are still small enough that the plasma arcs 84 and 85 are maintained and a low impedance path for current flow is maintained.

But at some point in time, the armature has rotated enough so that the gaps are too large for the plasma arc to be maintained. It is the characteristic of plasma arcs that they provide a very low impedance path for current flow when the arc is maintained, but rapidly switch to a very low impedance path for current flow when the arc is extinguished. This occurs at the instant of time shown in FIG. 7C. Now the gaps 86 and 87 are too large to maintain the plasma arc. This switching time is typically on the order of nanoseconds.

During times corresponding to FIG. 8A and FIG. 8B, the value of 25, $V_{out}$ will be equal to 24 (**V1**) for virtually any amount of current flow. In the context of our PPP process, this will correspond to time **T1** in FIG. 6.

At the moment corresponding to FIG. 8C, the current flow through the spark gap will suddenly drop to zero, with a characteristic time on the order of nanoseconds. This will correspond to the beginning of time ∆**T** in FIG. 6. When the current flow drops suddenly to zero, the wire 3 can no longer be supplied with electrical charges. Any electrical charges which are on the wire and cause it to have potential difference in excess of $V_t$ will rapidly be carried away by the flow of gaseous ions in the corona discharge. This will continue until enough charges are carried away from wire 3 that its potential difference is reduced to $V \approx V_t$, at which time the flow of gaseous ions will cease. This corresponds to the conclusion of time ∆**T**. Until there is some other way for charges to enter or leave the wire, it will remain at potential difference $V \approx V_t$. The duration of ∆**T** depends upon the capacitance **C** of the wire-tube arrangement, the total current flow **I** from the wire, and the difference between $V_p$ and $V_t$ according to:

$$\Delta T = C \, (V1 - V_t) \div I$$

For values typical of wire-pipe type electrostatic precipitators, it can be calculated that $\Delta T \approx 3 \times 10^{-4}$ seconds,

Once the flow of ions has ceased, the particles in layer 23 will begin to acquire positive charge by induction, beginning the "pith ball" effect during time period **T2**. It is important to note that the spark gap device is designed to reduce the potential difference to a level precisely at $V \approx V_t$, no matter what the actual value of $V_t$ is. Reduction of the potential difference to a level above $V_t$ will not typically produce the "pith ball" effect, and is thus optimal in the present process. $V_t$ can be constantly varying during normal operation of the process so the mechanism by which the spark gap device automatically reduces potential difference to just below the current value of $V_t$ is important. Also, the strength of the "pith ball" effect depends upon the square of the applied potential difference, so it is important for process optimisation that the potential difference not be reduced much less than $V \approx V_t$. , otherwise the repulsive forces on the particles in layer 23 would be unnecessarily small and the effectiveness of the device would suffer correspondingly.

As the armature continues to rotate, it comes to a position shown in FIG. 8D where the gaps 84 and 85 are sufficiently small to establish new plasma arcs. Then the high voltage from 24 is again directly connected from terminal 82 to terminal 83 with very little voltage drop so that output voltage 25 is of value

$$V_{out} = V1.$$

Again, the plasma arc provides a turn-on switching time on the order of nanoseconds. The

$$V_{out}$$

$$= V1$$

relationship will be maintained until the armature is in the position corresponding to FIG. 8C once again.

The time required for the armature to rotate from position 8C to 8D corresponds to **T2** in FIG. 6. During this time

$$V = V2,$$

(where **V2** $\approx V_t$). The time required for the armature to rotate from position 8D to 8B to 8C corresponds to **T1** in FIG 6. During this time

$$V = V1.$$

It can be readily seen that by choice of the armature geometry and rotational frequency, any desired values of time periods **T1** and **T2** can be achieved for operation of the PPP process.

Setting the power supply 4 to produce a potential difference output **V1** as close to the sparkover voltage $V_s$ is also important for process effectiveness, since the fine dust capture efficiency and the electrostatic adhesion forces depend on this parameter. The sparkover voltage is constantly varying during normal operation of the process. Fortunately, conventional electrostatic precipitators also require operation with voltages as near as possible to sparkover as possible and technology for automatic control of power supplies is mature. It is anticipated that the PPP process would utilise similar automatic control schemes for its power supply 4. Essentially, such automatic controls slowly and continuously increase the voltage 24 ,**V1**, until a sparkover occurs. When the sparkover occurs, the power is quickly shut completely off to extinguish the spark, then reset at a slightly lower voltage than that at which the previous spark occurred. The increase rates and reset voltage difference can be operator set to optimise the process. The result is a power supply which will produce occasional sparkover, but will operate with an average voltage near the current sparkover point. Such momentary sparks will not affect the PPP process detrimentally, so long as the spark frequency is not excessive.

The spark gap is a unique device for this application in that it can provide both the required rapid switching transient times as previously described, and it will automatically result in the potential of the wire being reduced to a value just below the threshold of corona discharge $V_t$, no matter what the actual value of $V_t$ might be at that moment in time. As previously described, the actual value of $V_t$ is constantly varying as a result of variations in gas temperature, composition, dust loadings, etc., so this feature is especially fortuitous in the switching device.

The special advantages of the PPP process can be illuminated by an analysis of the motion of the solid particles within the device. During the time period **T2** when the particles are propelled into the space between the inner surface 8 and the wire 3, the particles are moved horizontally under the action of electrostatic forces, but they are also free to move under action of gravity and drag from upwardly flowing gases.

During their travel through the gas stream, intimate contact between the gas and solids is achieved. The particles are uniformly dispersed by virtue of the mutual electrostatic repulsion of the individual particles. The full surface area of all the particles is exposed to the gases and particles are dispersed to all regions of the gas flow. The distance that the particles are propelled into the gas stream is determined by the magnitude of the potential difference **V2** and the duration of time **T2**. For short periods of **T2**, the particles are barely projected into the gas. For long periods, the particles can completely penetrate to the center of the tube. This is the mechanism to control mixing and contact of gas and solids.

In the case where the gas velocity is less than the terminal velocity of the particles, the particles will necessarily travel downward through tube 1, alternately being driven (and adhered) to the collection electrode and then propelled out into the gas stream where they fall by gravity. The bulk rate of descent can be controlled by the timing of the "square wave" of the applied voltage as shown in FIG. 6. For shorter periods of **T1** and longer periods of **T2**, the particles will spend more time falling through the gas and will migrate downward at a faster bulk rate. For longer periods of **T1** and shorter periods of **T2**, the particles will spend more time adhered to the collecting electrode and will migrate downward at a slower bulk rate.

It would be expected that at upward gas velocities that exceed the terminal velocity of the particles, the particles would actually be carried upward by the gas during **T2**, and that the terminal velocity would be the limiting gas velocity for proper operation of the system. However, the contrary has been found to be the case in actual operation. The particles actually move downward during their projection into the gas stream, even when gas velocities exceed the terminal velocity. This observation has far reaching consequences for practical machine design, since it allows for high gas velocities (and high "slip velocities"), thus reducing equipment size and cost for given process throughputs.

The effect can be explained as the result of two unique fluid mechanical phenomena. By design, enough solids are treated in the system such that they form a layer on the collecting electrode which can be several particles thick. During the first moments of the projection of the layer from the collecting electrode surface, **T2**, the particles behave as an assemblage of particles, not as individual particles. Their bulk mass exceeds the fluid drag on their bulk, and as a result, they move downward. In fact, their downward motion actually induces downward gas motion in the vicinity of the collecting electrode as the assemblage of particles drags the gas down with it.

Eventually, because of mutual electrostatic repulsion, the assemblage of particles disperses into the gas and the particles begin to behave as individuals. However, even then, time is required for the particles to reverse their downward motion and accelerate upward with the gas. It is a feature of the device in this mode of operation that the duration time of **T2** be short enough that the particles will not have enough time to accelerate up to the gas velocity and travel upward. In practice, this time is typically 0.1 to 1.0 seconds for the particle sizes of interest.

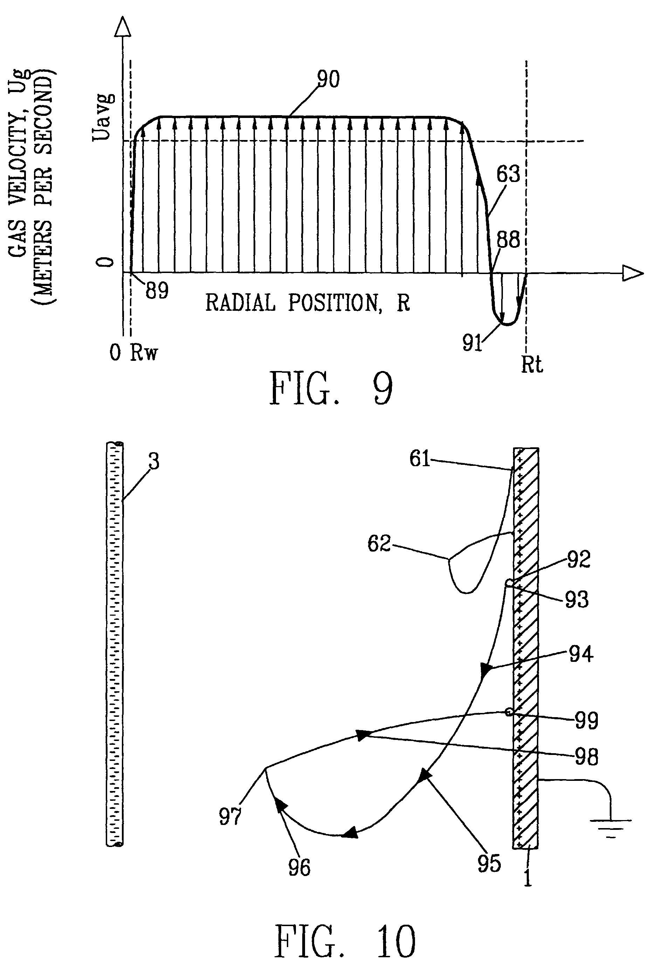

It is interesting to study the actual gas velocity profiles and particle trajectories achieved in a properly designed PPP. FIG. 9 shows the gas velocity as a function of radial position from the center. At the surface of wire,

$$R = R_w,$$

the gas velocity 89 is $U_g = 0$, but increases rapidly at distances away from the wire surface. Gas velocities 90 are fairly constant across much of the tube, and are in excess of the average velocity $U_{avg}$,. Typically, these gas velocities will exceed the particle terminal velocity by several times. As position approaches the tube wall,

$$R = R_t,$$

the velocity 88 decreases to zero, then actually reverses direction 91 in close proximity to the wall. This is due to the drag of the falling assemblage of particles on the gas. As will be discussed later, this has an important effect on the good functioning of the device.

The trajectory of a given particle, as shown in FIG. 10, is also interesting. When the potential difference is in the **T1 ($V > V_t$)** part of the cycle, a single particle 92 is held in a stationary (or slowly creeping) position 93, where it is adhered to the wall by the ion current flow. During the initial stages of **T2 ($V < V_t$)**, it first

travels downward 94 and away from the wall with the assemblage of particles upon initial repulsion from tube 1. Subsequently, the particles disperse into the rising gas stream, and begin decelerating 95 from their downward motion, stop their vertical motion, and begin accelerating 96 upward by drag of the gas. During this time, the gases are flowing past the particle at vertical slip velocities well in excess of the particle terminal velocity. With proper design, the voltage square wave cycle reverts to **T1 (V>$V_t$)** at the point 97 before the particle travels upward very much After the initiation of **T1 (V>$V_t$)** the particle is rapidly driven 98 to the wall by the corona discharge where it becomes adhered to the tube surface in its new static position 99. The interaction of the electrostatic forces, gravity, and the drag from flowing gases creates the characteristic looping action of the particle trajectory.

The slip velocity, that is the relative velocity between gas and particle, is a critical parameter for heat and mass transfer. It is well understood in heat and mass transfer theory that transfer rates increase strongly with increasing "slip velocity". Heat and mass transfer are limited by the formation of a fluid boundary layer at the surface of the solid. Any heat or mass must diffuse through this layer. The thickness of this layer decreases with increasing slip velocity, thus the improved heat and mass transfer rates. Typically, the slip velocity is limited to the terminal velocity of the particle, as previously discussed.

The overall slip velocity is best analysed as the vector sum of a vertical component and a horizontal component. As discussed above the vertical component of the slip velocity is greater than the particle terminal velocity for much of the cycle, due to the fact that the particle-gas interaction is in a transient acceleration mode. Even more important is the fact that the horizontal velocity of the particle through the gas can be quite high. The horizontal motion results from the electrostatic forces of the charged particle in the strong electric field. Typically, velocities on particles resulting from these electrostatic forces can be 10 to 20 times greater than the particle terminal velocity. Thus the slip velocity in the horizontal direction can be 10 to 20 times greater than is normally encountered in other types of gas-solid contact devices. Because of the ability of the PPP to operate with slip velocities several times the particle terminal velocity, it can exhibit heat and mass transfer performance many times greater than competitive devices. The repeated action of exposure to the gas stream under high slip velocity conditions results in the excellent heat and mass transfer rates attainable.

Unless extremely low gas velocities are utilised, nearly any gas-solid contact device will generate dust. That is because any supply of solid granular material invariably includes a portion of fine material, whose terminal velocity is less than the gas flow velocity. These particles will be carried away with the gas flow. As well, abrasion within the device will create small particles in the device, which will also be carried away with the gas.

Any dust generated in the PPP will be electrostatically precipitated during the **T1** period of the voltage cycle. The concern is that during the **T2** period, the fine particles are propelled out into the gas flow where they can be accelerated quickly by the upwardly flowing gases and be carried upward. Two inherent features of the PPP defeat this tendency.

The electric mobility of charged particles, that is the resultant velocity from an applied electric field, is proportional to particle size. This results from the fact that the magnitude of the electrostatic charge induced on the particle is proportional to the square of its diameter, while the fluid mechanical drag on a particle is proportional to the first power of its diameter (for particle sizes of interest). Thus small particles are repelled more slowly from the collecting electrode surface and travel a shorter distance away from the tube surface 8 than for larger particles. When the voltage cycle switches over from **T2** to **T1**, they are then precipitated back onto the electrode.

Again referring to FIG. 9 and FIG. 10, a larger sized particle 92 might travel according to the trajectory shown and the distance of the point corresponding to 97 would be as shown. But a smaller sized particle 61 would reach its maximum distance 62 from the tube 1 and would spend much of its time in the region 91 of downward gas motion, or region 63 of reduced gas velocity. Thus the continual downward migration of the smaller sized particles through tube 1 is maintained.

Additionally, the radially inward horizontal velocity of any given particle during **T2** will normally be less than the radially outward horizontal velocity during period **T1**. This results from two fundamentals of the process. First, the amount of charge which can be applied to the particle by the corona discharge ion flow (during **T1**) exceeds that which can result from induction (during **T2**), based on fundamental principles. Also, the field strength in space 20 is necessarily greater during **T1** than during **T2**, because **V<$V_t$** during **T2** and **V>$V_t$** during **T1**. Thus, it is a simple matter of design of the relative durations of **T1** and **T2** to assure that the fine particles will always be capable of traversing a greater distance (radially outward) during **T1** than (radially inward) during **T2**. With proper design, very little dust will escape the PPP device along with the outgoing gases 14.

This aspect of the PPP makes the device economically advantageous over competing technologies, since other technologies typically require another piece of equipment downstream to capture dust.

To summarize the process again in reference to FIG. 1A, gases 6 flow upward through tube 1 . Solid particles 15 are introduced near the top of the tube through an injector 16 and travel downward inside the tube with descent rate, mixing rate, and transfer (heat and/or mass) rate controllable by the periodicity of the high voltage square-wave applied to the wire. Even though particles are introduced at one location on the tube wall, the cyclical electrostatic deposition and repulsion spreads the particles uniformly around the circumference of the tube. Quite a wide range of regimes of behaviour can be achieved. Generally, tube diameter, length, voltages, switching cycles, gas velocity, and particle sizes will be chosen (if not constrained by the process) to produce the desired results of heat and/or mass transfer, fine dust collection efficiency, gas cleaning by adsorption or chemical reaction, etc.

As discussed previously, gas velocities can be less than or greater than the particle terminal velocity, while maintaining a net downward motion of the particles. This allows the process designer to choose the velocity from a wide rage of options. In general it is anticipated that high velocities will be chosen in order to reduce size and cost of the equipment. High velocities also improve heat and mass transfer rates.

Generally particle sizes can be chosen from a wide range, with limitations imposed by the particle electromechanics of the adhesion/repulsion processes. Particles of size less than about 50 $\mu$m will exhibit "natural" adhesion forces (London van der Waals', liquid capillary and/or solid bridges, etc.) which exceed the "pith ball" repulsive forces, and thus cannot be repelled from the collecting electrode surface. It should be noted that a spectrum of particle sizes can be handled, and that these smaller particle sizes less than 50 $\mu$m can be included without detrimental performance, particularly when the larger sizes comprise a majority of the material.

Particles larger than about 2 mm diameter will typically have gravitational forces which preclude them from being adhered to the collection electrode by the ion current flow. The resulting electrostatic forces are typically not strong enough to counteract the gravitational force and these particles will simply fall through the tube. They can be passed through the system without affecting the function with respect to other properly sized particles, but they will not typically be very effective at providing desired transfer rates between themselves and the upwardly flowing gases.

This optimal range of particle sizes fortunately coincides with optimal sized ranges for many types of gas-solid systems. Generally particles larger than 2 mm do not provide sufficient surface area for good heat and mass transfer. Particles smaller than 50 $\mu$m are difficult to manufacture by grinding or pulverising processes.

The cycle of solid particle projection into the gas stream and electrostatic precipitation from the gas to the collecting electrode wall results in excellent mixing between the gas and solids. The particle motion necessarily creates gas turbulence transverse to the primary direction of flow. Any given particle makes many excursions into the gas stream during its residence time in the PPP. Likewise, any molecule of gas is exposed to many passes of the solids during its residence time in the device. Because relatively small particles can be utilised, large contact surface areas are realised and the contact between gas and solid surface is extensive. Slip velocity can be made very large, thus optimising heat and mass transfer.

Pressure drop can be designed by simple adjustment of the cycle times for the voltage. It is clear that during the period **T1** the solid particles are held against the collecting electrode and the gas has unimpeded flow upward through the tube with little pressure drop. During the **T2** period of the cycle, the particles will be projected into the gas flow, and there will be drag on the gas to accelerate them. Thus, pressure drop will depend upon frequency and duration of the **T2** periods.

Countercurrent flow of the solid particles and gases is a truly unique characteristic of the device. As described, the average gas flow is upward, while the average solid material flow is downward. Other devices which operate in countercurrent fashion require that gas velocities be less than the terminal velocity of the particles. This proves in practice to be a serious limitation, since terminal velocities of small particles are very low. Devices must then be correspondingly large to treat reasonable gas flow volumes at such low velocities. The PPP process allows gas velocities to exceed the particle terminal velocity, while still providing countercurrent flow.

In the case of the PPP functioning to exchange heat between gases and solids, the gas temperature will typically vary with vertical position inside the tube. In the case of hot gases transferring heat to colder particles, the gas temperature will be highest at the bottom of the tube and decrease at higher elevation. It is well know that the electrical breakdown strength of gases, that is the electric field strength at the incipience of sparkover, decreases with increasing gas temperature. Since the potential difference between the wire 3 and the tube 1 is necessarily the same for the entire length of the tube, it is likely that electrical sparkover will occur at the lower end of the tube at voltages well below that which would cause sparkover at the upper (cooler) end of the tube. As has been described, optimal performance is obtained when the potential difference **V1** be as close as possible to the sparkover voltage, **V$_s$**. It is well understood from conventional electrostatic precipitator theory that sparkover voltage depends upon tube diameter, with high sparkover voltages for larger diameter tubes. Therefore, it is probable in these cases, that it would be advantageous to provide a tube of tapering diameter with smaller diameter at the top and larger diameter at the bottom in order that electric field strengths be near their optimum for the entire length of the tube.

As well as functioning as a solid-gas contactor, to achieve heat transfer between solid particles and gas, chemical reaction between solid particles and gas, gas scrubbing or other uses previously described, the PPP process can be adapted to advantageously achieve other functions will now be described.

Operation as a Fine Particulate Collector

As described, the basic apparatus of the PPP is similar to a traditional wire-pipe type electrostatic precipitator. These devices have been used for nearly a century for capture of fine dust and are very efficient, even for submicron sized dust particles. This basic electrostatic precipitation function is maintained in the PPP. Generally, the efficiency of a precipitator for a given volumetric flow of exhaust gases is related to both the collecting electrode surface area and the square of the applied voltage. The PPP gives an even greater fine dust collection efficiency than would a conventional wire-pipe precipitator of the same dimensions. This is due to the presence of the solid particles and the fact that they act as additional collection sites for the fine dust.

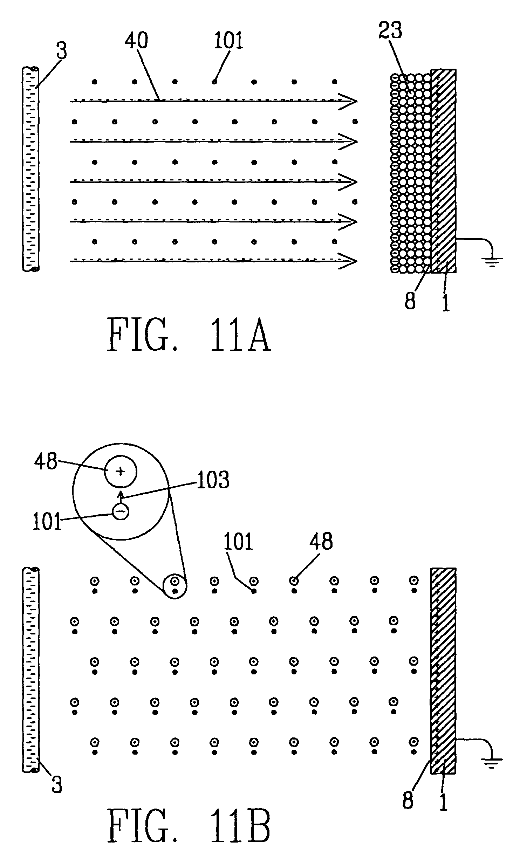

Consider FIG. 11A. Fine dust 101 is electrostatically charged to negative polarity due to the ion current flow 40 during the period T1. Also, during this period, the charged fine dust is electrostatically driven towards the particle layer 23 on inner surface 8 of the tube 1. This is conventional electrostatic precipitator theory.

During the T2 period of the voltage cycle, a unique process occurs as depicted in FIG. 11B. The voltage is reduced from the optimum of

$$V = V1 \approx V_s$$

to a level

$$V = V2 \approx V_t.$$

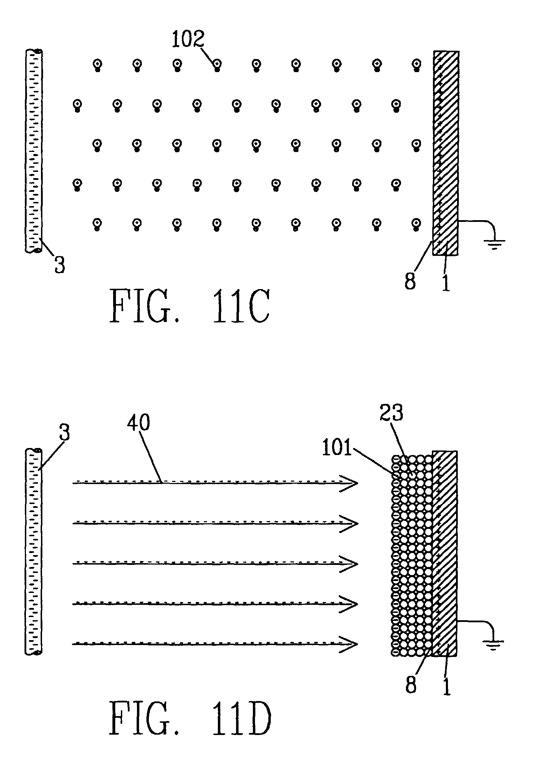

However, during this period, the fine dust particles 101 are still negatively charged. They are airborne and never in contact with tube surface 8 to allow induction charging. The larger solid particles 48 which are repelled from the collecting electrode are positively charged. The negatively charged fine dust 101 experiences forces 103 which attract them to the larger solid particles 48. Upon impact with the larger particle 48, the fine dust particle 101 may adhere to the solid particle forming an agglomerate 102 as depicted in FIG. 11C. When the voltage cycle is returned to

$$V = V1 \approx V_s,$$

as depicted in FIG. 11D, the agglomerate of the two particles behaves essentially like the larger particle and is precipitated onto the tube surface 8. The fine particles 101 are now imbedded in the particle layer 23. In essence the solid particles will act as scavengers, traveling through the gas stream during T2 and gathering fine particulate matter, then returning to the collection electrodes during T1.

The collection effect of the solid particles will be superimposed on the collection of the tube inner surface by normal electrostatic precipitation. Since their surface area is many times greater than the inner surface 8 area, the collection efficiency of the device will be much better than that for the tube alone. The possibility that the PPP can offer collection efficiency in excess of normal electrostatic precipitators with similar dimensions opens the possibility that the device can be used as a stand alone fine dust collector, where the solid particles are introduced only for their effect at enhancing fine particulate capture efficiency.

A further advantage of such a fine dust collection device is that it could be designed to achieve good performance for high resistivity dusts. Many industrial air pollution sources emit fine dust particles of high electrical resistivity, which have proved troublesome to collect in conventional electrostatic precipitators. High resistivity dust layers on the collection electrodes in the precipitator produces "back-corona" whereby positive gaseous ions are emitted from the ash coated collection electrode into the gas stream. These positive ions have a cancelling effect on the precipitator's normal operation of negative ions flowing from the discharge electrode. The overall effect can be severely detrimental to performance. Usually, these problems occur when the bulk resistivity $\rho$ of the ash layer is greater than $1 \times 10^8$ $\Omega$-m.

The PPP can be utilised to remedy this problem. Particles 15 injected into the device may be 200-500 $\mu$m size and of bulk electrical resistivity $\rho < 1 \times 10^7$ $\Omega$-m. A good example would be glass particles because of their low cost and control of resistivity by adjustment of chemical composition, especially sodium content.

When the PPP functions, the deposited layer on the collection electrode will be a mixture of the larger particles and the high resistivity dust. If the amount of particles introduced to the PPP is such that more than half of the material in the layer are the large particles, the overall resistivity of the layer will be very nearly that of the large particles. Then the deleterious effects of the high resistivity particulate will be defeated and good precipitator efficiency will be obtained.

The mixture of large particles and collected fine dust exiting the bottom of the PPP can easily be separated by size. Because of the wide difference in sizes (large particles > 200$\mu$m, fly ash < 10 $\mu$m) this can be done effectively by conventional means, such as screen classifier. The large particles can be recycled to the top of the PPP for reuse and the fine dust disposed of.

Operation as a Heat Exchanger

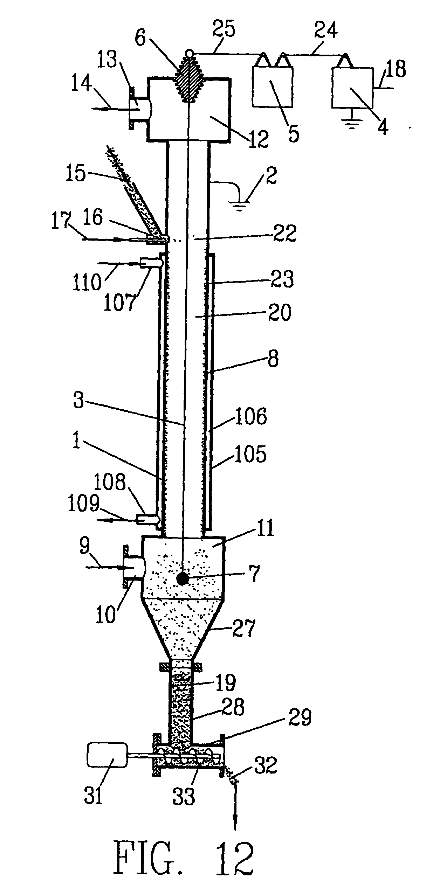

The PPP process also lends itself to improved heat transfer from the tube inner surface 8 to the gas, with the solid particles acting as intermediary heat transfer agents as depicted in FIG. 12. Tube 1 is encased by a second larger concentric tube 105, creating a space 106 between the tubes. Space 106 is filled with air, water, or other heat transfer fluid. Ports 107 and 108 allow for the heat transfer fluid to be introduced and removed from space 106, thus resulting in a flow of heat transfer fluid through the space. In the case of the gases 9 flowing through the inside of tube 1 being hot gases of temperature greater than that of the heat transfer fluid 110 entering the device, heat will be transferred from the hot gases to the heat transfer fluid so that the temperature of heat transfer fluid leaving the device 109 is greater than that of fluid entering 108. This type of device is commonly known as a double shell heat exchanger.

If the device is further developed to function as the previously described PPP process, with solid particles 15 introduced to the inside of tube 1 through injector 16, the particles will alternately be in contact with the hot gases in space 20 (as in FIG. 1B) and the inner surface 8. When the particles are dispersed in the space 20 the particles will be heated by the hot gases. When the particles are in contact with surface 8, they will transfer some of their heat to tube 1, which in turn will transfer heat to the heat transfer fluid flowing through space 106.

Compared with a conventional double shell heat exchanger, the heat transfer rate from the hot gases to the heat transfer fluid is improved in several ways. First, the particles carry heat from the hot gases to the inner surface 8. Second, the corona discharge itself creates a "corona wind" turbulence in the gas stream. The flow of charged ions actually induces gas flow transverse to its overall vertical upward flow direction. This transverse gas flow improves the heat transfer rate. Third, the movement of particles towards and away from the inner surface 8 also induces turbulence in the gas flow which serves to improve the heat transfer. Fourth, the continual scouring action of the solid particles against the inner surface of the tube 1 prevents dust build-ups. Excessive stationary dust build-ups are known to have severe deleterious effects on heat transfer rates because they act as a insulation. Prevention of the formation of these thermally insulating dust layers can substantially improve heat transfer performance.

## Operation as a Condensing Heat Exchanger and Chemical Reactor

Another possibility is operation with the inner surface 8 at a temperature below the dew point of the gas stream. Most industrial gas streams contain water to varying degrees. The dew point is defined as the temperature at which water is condensed from the gas stream onto a surface to form a liquid phase. If a double shell heat exchanger is provided as above, and the space 106 is provided with a heat transfer fluid of sufficiently low temperature that the inner surface 8 of tube 1 is at a temperature below the dew point of the gas stream, a liquid film of water is developed on the surface 8. Normally, this situation is avoided in industrial equipment, since the water will combine with fine dust and form mud-like deposits on the surface. Upon drying, these deposits will become hard and impossible to clean.

With proper design of the PPP, the inner surface 8 can be operated at temperatures below the dew point. A water film will form, but the particles in layer 23 deposited on the surface will pick up the water by direct contact. Then when the particles are subsequently dispersed into the hot gases (not shown) the water will be evaporated, leaving the particles dry. Generally, the time average temperature of the particles as they cycle between the surface 8 and the hot gases must be above the dew point, in order to provide drying, but the particle surface will alternately be wetted and dried. The inner surface 8 of the tube will continually be forming the water film, but the particles will continuously be carrying away the water. The rates of liquid water formation and drying must be balanced.

This effect could be important because there are many chemical reactions between pollutants (in gases) and sorbent solids which will only occur in the presence of water. Then the PPP process can be advantageously applied if the solid particles 15 consist of the desired sorbent material. During the transient time when the particle surface is wet, these pollutants will be absorbed by the water on the particle, then the absorbed pollutants will react with the solid sorbent in a liquid phase reaction, generally forming a solid precipitate.

A good example of this is the reaction of $SO_2$ with limestone (calcium carbonate) to form calcium sulphite. Reaction of gaseous $SO_2$ with dry limestone is limited. However, $SO_2$ gas dissolves in water, and if calcium carbonate is in contact with the water, the $SO_2$ will react with the Ca to form calcium sulphite precipitate. This process continues so long as the calcium is available.

## Large Scale Design

A single tube as described above may not be capable of handling sufficient quantities of gases and solids for many industrial applications. In order to treat large volumes of gases and large quantities of solids, a PPP device may be constructed with many such tubes.

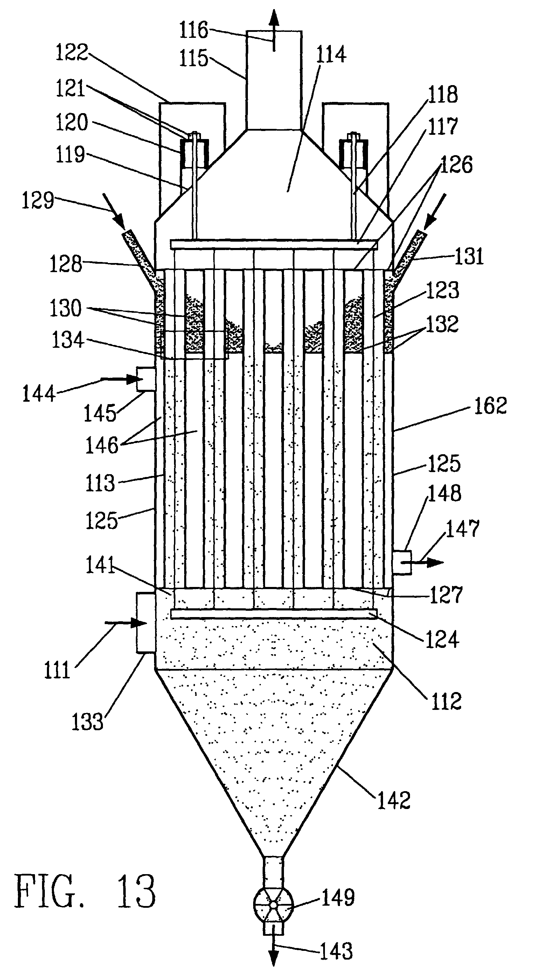

Such a device could be constructed as depicted in FIG. 13, which is a sectional view of a PPP module 162. An array of tubes is provided, with gases flowing through them in parallel. Gases 111 enter a lower plenum 112 through port 133. Gases in the lower plenum are distributed and flow upward through a plurality of tubes 113. Gases exit the tubes at the top and are gathered in an upper plenum 114. In one preferred embodiment, the gases 116 are discharged to atmosphere via an integral stack 115 at the top of the plenum.

It is generally possible to discharge gases directly to atmosphere because of the lack of residual dust in the discharged gases. Alternatively, gases could exit the upper plenum 114 through a port for further handling, such as to a fan (not shown).

In general, there is no limitation to the number of tubes in both the width dimension and depth dimension of the module which could be included in such an array. The number of tubes for a given application will be chosen based upon the solid particle and/or gas flow rates required so that each tube handles the optimum quantity of solids and/or gases.

A frame 117 above the tubes is suspended from one or more support bars 118 which extend through penetrations 119 in the outlet plenum wall. The support bars are attached to brackets 121 which in turn rest on ceramic insulators 120. This assembly is enclosed in housing 122. The ceramic insulators allow for mechanical support of the frame while maintaining electrical insulation from the rest of the equipment. The entire insulator assembly can be purged with air to prevent contamination of the ceramic insulators with dust or other impurities. High voltage power supply is connected to any one of the brackets 121 by conventional means (not shown). Such high voltage power is then supplied to the frame and wires 123 attached to it. Such arrangements are common in electrostatic precipitators.

It is also possible to sectionalise the high voltage power supply to the various wires. It may be beneficial to provide separate high voltage power supplies for separate sets of wires. Then, each set of wires will have its own separate frame 117 and 124 and its own separate power supply. Such arrangements are also common in electrostatic precipitators.

Individual wires 123 are hung from frame 117 in such a way that they extend through the center of each tube and are axially aligned. A second frame 124 is in the lower plenum and the wires 123 are connected to this as well. This lower frame is not supported by insulators, but rather is free hanging. Wires 123 are attached to the frame to assure proper centering of each wire in each tube. The second frame also acts as a weight at the bottom on the wires to assure that they are in tension and hang straight through the center of each tube.

The array of tubes is enclosed with walls 125. The top and bottom ends of the tubes are fitted with tube sheets 126 and 127 respectively which prevent gases from flowing between the tubes.

A port 128 in the side of the device positioned below tube sheet 126 allows solid particles 129 to be introduced to the space 130 between the tubes and the wall 125. If necessary, additional ports 131 may be employed to assure distribution of particles to all the tubes. A third tube sheet 132 prevents the particles in space 130 from falling to the bottom of the device and thus the particles fill space 130 above the third tube sheet 132. Tube sheet 132 is positioned just below the point of solid particle injection into the tubes.

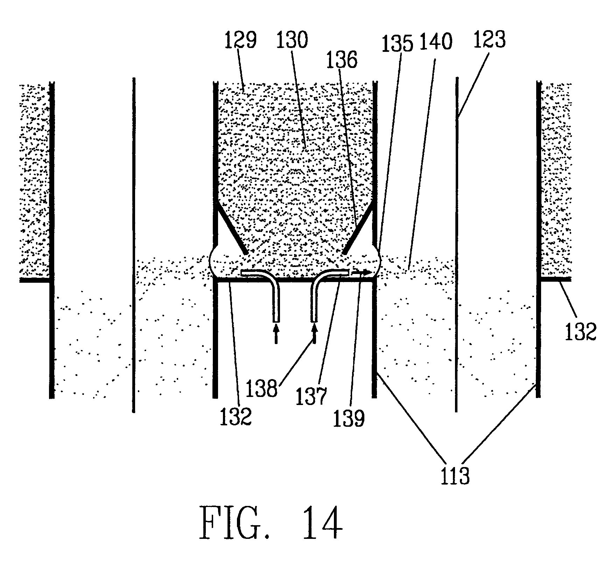

A convenient means of controlling the rate at which particles are introduced to each tube is depicted in FIG. 14 which is a close-up view of area 134 of FIG. 13. A short distance above the third tube sheet 132, each of the tubes 113 is provided with a hole 135 to allow particles to be introduced to its inside. As already described, space 130 is filled with particles 129. Baffles 136 are provided so that particles will not fall through the holes due to their angle of repose. Nozzles 137 are located opposite each hole in such a way that they are covered by the particles 129 in their angle of repose below the baffle. Compressed air 138 is supplied to each nozzle causing a jet 139 of air to emanate from each nozzle, directed to pass through the hole 135. This jet of air will entrain particles 129 and thereby inject them into the space 140 between wire 123 and tube 113. In general, the rate of particle injection will be monotonically related to the quantity of air passing through the nozzle 137. If properly designed, relatively small quantities of air are required to control relatively large amounts of particles.

Valves (not shown), which can be located outside of the module, can be used to control the amount of air to each nozzle, thus in turn controlling the amount of particles injected into each of the tubes 113.

Returning to FIG. 13, particles 141 exit the bottom of each tube and drop through the inlet plenum 112 by gravity. The inlet plenum is fitted with an inverted pyramidal shaped hopper 142 so that falling particles 141 are gathered to a single location for discharge 143 from the device through airlock valve 149. Other types of solids discharge schemes may also be employed.

Without the features for injection of particles, this device is similar to so-called wire-pipe precipitators. A common problem in these type of devices is assuring equal distribution of inlet gases 111 into each of the tubes 113. Inlet gases enter horizontally and must turn by 90º to enter the tubes. Because of inertia of the gases, the distribution between the various tubes is often highly non-uniform. This is because the individual tubes provide very little resistance (pressure drop) to the flow of gases. Non-uniform gas flow distribution can lead to poor performance of the precipitator, since process efficiency is usually strongly dependent upon the gas velocity in each tube. For conventional electrostatic precipitators, the typical engineering solution has been to perform flow modeling studies of the inlet plenum and use baffles, turning vanes and the like to distribute the gases uniformly. This often leads to various problems due to interference of the baffles with the high voltage frame 124, dust build-ups and pluggages on the baffles, and the fact that process variables may not match those assumed during the flow modeling studies or may vary with time during process operation.

The PPP device offers an advantageous solution to this problem. Due to the presence of particles inside the tubes and their repeated acceleration by the upwardly flowing gases, there is a monotonic relationship between gas flow velocity and pressure drop for each tube. Thus, if the inlet plenum design causes gases to preferentially flow through some of the tubes, the resulting increased pressure drop of those tubes would favor diversion of some of these excess gases to other tubes. This is contrary to conventional electrostatic precipitators where the tubes provide essentially zero pressure drop.

Futhermore, the pressure drop of each tube monotonically depends upon the amount of particles injected into that tube, that is if more particles are injected, then the pressure drop is greater. As described above, the pneumatic injection scheme allows for control of the particle injection rate to each tube. Thus, if there is a high gas flow volume through any one given tube, the injection rate of particles to that tube can be increased by increasing the compressed air supply to that nozzle. This would have the effect of increasing the gas pressure drop across this tube and consequentially diverting gases from this tube to other tubes. In such a way, the PPP device can be "tuned-up" to provide differing particle injection rates to each of the tubes to compensate for the intrinsic tendencies of the inlet plenum design to non-uniformly distribute gases to the various tubes. This would result in operation where the gas flow distribution is more uniform than it would be without particle injection, and also an operation where the ratio of gas to solids flow in each tube could be made essentially the same for all the tubes. It would be expected that this would be desirable for optimal process efficiency.

Such a scheme could be manually implemented for cases where there is very little process variation with time. Then the deleterious effects of the inlet plenum on gas flow distribution could be compensated for. Alternatively, such a scheme could be automated for processes which are time varying. Flow rate of each tube would be measured, then the valves for compressed air supply to each of the nozzles 137 would be automatically adjusted to compensate for increases or decreases of gas flow. For example, in an application where heat is transferred from the gases to the particles, the outlet gas temperature of each tube could be monitored with a thermocouple. If the temperature increased (an indication of increased gas flow through that tube) the valve for particle injection to that tube would be opened more to increase the particle injection rate. The increased particle injection would both decrease gas flow rate through the tube and also cool the gases more.

When heat exchanger operation is required, heat transfer fluid 144 is introduced the module through port 145 and flows through space 146 around the outside of tubes 113. Space 146 is bounded at the top by tube sheet 132 and at the bottom by tube sheet 127 and at the sides by walls 125. Heat transfer fluid 144 is heated (or cooled, depending upon the application) by the gases 111 flowing upward through the inside of the tubes 113. Heated fluid 147 exits the module through port 148. Generally a countercurrent flow is established with heat transfer fluid 144 flowing from top to bottom and gases 111 flowing from bottom to top, but many flow patterns are possible which would depend upon the specifics of the application at hand. For example, additional tube sheets and ports could be provided to cause the heat transfer fluid to follow a serpentine path around the tubes. Such schemes are well known in the field of heat exchanger design.

Glass Furnace Exhaust Gas Cleaning with Simultaneous Raw Material Preheating

Many of the inventive aspects of the PPP process can be illuminated by studying a specific application example in detail. The glass melting process is chosen for the example because particle-solid heat and mass transfer, fine particle capture and acid gas reduction from the gas stream and heat exchanger functions are all utilised.

Glass is made by heating and melting a mixture of solid raw materials to a liquid state. The melting is done inside of a furnace and necessarily requires substantial amounts of heat. Typically, this heat is generated by the combustion of fossil fuels with the exhaust gases from the combustion leaving the furnace. Exhaust gas temperatures immediately after the furnace are quite high, typically 1300-1450°C. Combustion air preheaters are normally included which recover some of the heat in these gases. Even so, gas temperatures at the discharge to atmosphere are quite high, thus substantial amounts of heat are wasted. The cost of fuel for the furnace is a major component in the cost of making glass.

The raw materials for glass are typically called batch. Batch generally refers to an assemblage of various pulverous materials including silica sand, limestone, soda ash, salt cake, and a variety of other minor ingredients. The material and mixture ratios are carefully chosen to produce glass of the desired properties and quality. Generally these materials are prepared in a finely divided form to promote their melting rates. Sizes are typically 100 to 200 μm diameter with a maximum size of 1 mm. Also, recycled glass, either from the factory or from external sources is used as a raw material. This recycled glass is called cullet. Cullet can be pulverised to result in sizes less than 1 mm and mixed with the batch. Hereinafter, the word "batch" will be used to mean either batch alone, or the mixture of batch and pulverised cullet.

Glass furnaces emit various pollutants, most commonly particulate matter (fine dust) and $SO_2$. The particulate matter is especially difficult to collect because it is less than 1 μm in diameter, and the exhaust gas temperatures are high. Typically very large electrostatic precipitators are utilised, often preceded by absorption towers for chemical reaction of various reagents with the $SO_2$ pollution. Other gaseous pollutants are sometimes present, specifically, HF and HCl acid gases. Many local regulations require reduction of the amounts of these pollutants which are emitted to the atmosphere.

The PPP can be advantageously used to preheat the batch using heat from the exhaust gases. By preheating these materials before they are introduced to the furnace, the amount of fuel required for heating and melting them in the furnace can be reduced. This fuel reduction can represent a substantial economic benefit to the glass making process and also reduces the emission of the so-called green house gases (such as $CO_2$) simply because less fuel is burned. Simultaneous with this preheating, pollutant emissions such as fine dust, $SO_2$, HCl, and HF can be reduced with high efficiency to satisfy stringent regulations. $SO_2$, HCl, and HF emissions can be reduced because most glass batch contains substantial amounts of material which is chemically reactive with these acid gases, specifically soda ash ($Na_2CO_3$) and limestone ($CaCO_3$).

Fossil fuel fired glass furnaces are of several different designs. When air is combusted with fuel, the air is typically preheated in regenerative or recuperative heat exchangers, utilising some of the waste heat exiting the furnace. Essentially pure oxygen can also be used for combustion, with the following advantages and disadvantages:

Nitrogen oxide (a pollutant) formation in the furnace is virtually eliminated

- Glass quality is improved
- Specific fuel consumption of the furnace is reduced
- Requirement for and cost of air preheating equipment is eliminated
- Furnace efficiency is improved, i.e. smaller furnaces can provide the same production rates.
- Cost of producing oxygen is added to production costs

While the PPP could be applied advantageously to any of the glass production schemes, its benefits are greatest in the case of oxygen-fuel fired furnaces. This is because exhaust gas temperatures are higher, thus the batch can be preheated to high temperatures, and because a reduction in fuel requirements for the furnace is accompanied by a proportional reduction in the oxygen supply (and thus cost) for the furnace. As a result, the example now described will detail use with oxygen-fuel fired furnaces, but it should be kept in mind that similar arrangements could be provided for any type of furnace firing methods.

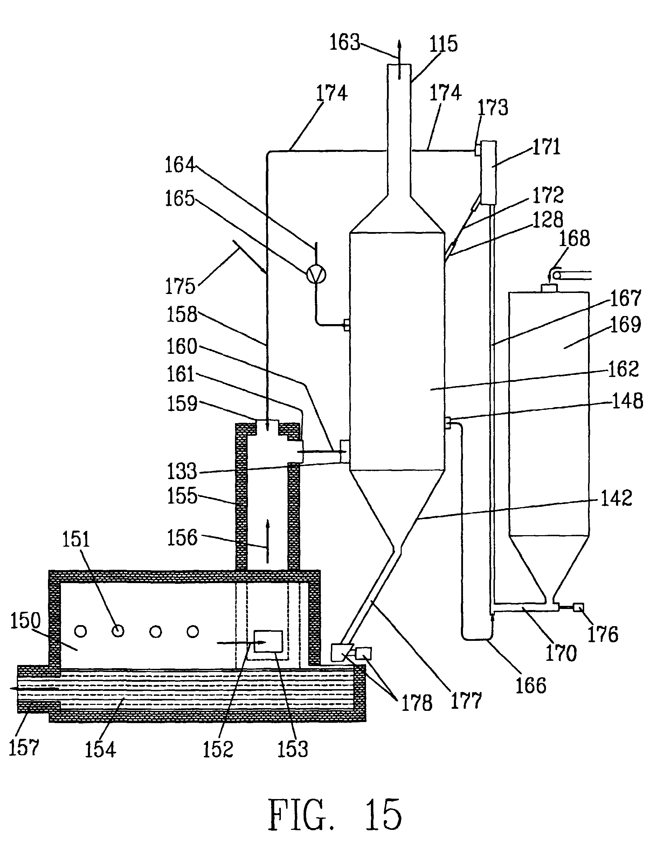

Reference is now made to FIG. 15, which is a schematic flow diagram of the process. Glass furnace 150 is heated by oxygen-fuel burners 151 to produce exhaust gases 152 which exit the furnace through port 153. The glass furnace is generally a refractory brick structure with a bath of molten glass 154 in its bottom. Molten glass leaves the furnace through throat 157 and is then formed into the desired glass product in forming machines, not shown.

Exhaust gases then flow through flue channel 155, which is also of refractory brick construction. Exhaust gases 156 in the flue channel are generally at temperatures of 1300ºC to 1450ºC. Cooling air 158 is added to the flue channel through port 159 to produce a diluted exhaust gas stream 160 which leaves the flue channel through pod 161. The cooling air quantity is chosen so that the diluted exhaust gas stream 160 is of the optimum temperature for the PPP process. Generally the temperature will be limited by the physical properties of the batch, specifically the softening temperature where batch constituents begin to melt. Typically, this softening temperature is about 600ºC, so this would limit the inlet gas temperature to the PPP module.

Gases then enter the PPP module 162, which is of the design shown in FIG. 13, through port 133. Internal operation of the PPP module is consistent with that already described. Cooled gases 163 exit the module through integral stack 115 and are discharged to atmosphere. Fine dust and acid gas pollutants are removed from the gases prior to discharge by the PPP.

Ambient air 164 is delivered to port 145 of the module via blower 165 for subsequent heating. By means previously described, heat from gases 160 is transferred to air 164, producing heated air 166 exiting the module through port 148. Heated air 166 is directed to flow through pneumatic conveying pipe 167.

Batch 168 is delivered to silo 169 by conventional conveying means such as belt conveyors, bucket elevators and the like, where it is stored for use in the furnace. Feeder 170, which can be of several types such as screw, vibratory, belt, etc., feeds batch from the silo 169 into the pneumatic conveying pipe 167 at a controlled rate. Heated air 166 conveys the batch to the separation chamber 171 located above or near the top of the module. During the conveyance, intimate mixing of the heated air with the batch dries the batch and turbulence of the conveyance breaks up any agglomerations of the batch, so individual particles are realised.

Because batch contains components such as soda ash and salt cake which are hygroscopic, deliquescent and/or water soluble, the batch must be dried before delivery into the module 162. Invariably, the batch 168 delivered to the silo contains moisture. Batch moisture can result from unintentional addition, such as from outside storage of materials and exposure to rainfall, from intentional addition to reduce fugitive dust generation upon handling or to promote mixing of the various batch constituents, or from absorption of moisture from humid air. In any case, subsequent drying of the batch can lead to caking and build-ups on equipment surfaces, formation of clumps and the like which would render downstream equipment inoperable. Dry and warmed batch can be handled easily through pipes, hoppers, etc. where moist batch could not.

In the separation chamber 171 which functions like either a settling chamber or inertial separator, dry batch 172 is dropped out and cooled air 174 exits through port 173. In the preferred embodiment, this cooled air 174 becomes the cooling air 158 added to the flue channel. However, in some cases, it may be necessary to add additional ambient air 175 to assure proper temperatures in the process. Because the separation chamber 171 is not perfectly efficient at removing batch particles from air, some batch (generally the finer particle sizes) will exit the separation chamber along with the cooled air 174. This batch dust is then introduced to the inlet plenum of the PPP module and is subsequently captured and added back to the bulk of the batch delivered to the furnace.

Dry batch is then directed to port 128 of the PPP module where it fills space 130 (see Figure 3) and is then available for injection into the various tubes. Generally, feeder 170 is equipped with a variable speed motor 176 or other drive means to allow adjustment of feed rate. This feed rate will be continuously adjusted in order to maintain dry batch supply to the module so that port 128 is always in a flooded condition and all the injection points inside the PPP module are supplied with dry batch.

Dry batch is injected into the various tubes comprising the PPP module and travels downward through the tubes as discussed above, contacting the gas flowing upwardly through the tubes. Heat is transferred from the gases to the batch particles. Because of the efficient countercurrent design, exiting batch can be at a temperature near the inlet gas temperature. This is especially important in light of the batch softening temperature limitations. If inlet gas temperatures were higher than the softening temperature of the batch, the possibility of the creation of "hot spots" and subsequent melting of batch inside of the module would exist. Therefore, only a countercurrent device is capable of heating batch to temperatures approaching the softening temperature without risking actual softening of batch inside the device.

SO$_2$, SO$_3$, HCl, and HF are chemically reacted with the soda ash and limestone constituents in the gas to form solid products of reaction, thus reducing the amount of these pollutants which are emitted to atmosphere. These chemical reactions are well documented in other sources. A typical reaction is:

$$SO_2 \text{ (g)} + Na_2CO_3 \text{ (s)} \rightarrow Na_2SO_3 \text{ (s)} + CO_2 \text{ (g)}$$

Generally, most glass formulations contain quantities of chemically reactive constituents which are well in excess of the stoichiometric requirements of the chemical reactions required for the pollution reduction, so high removal efficiencies can usually be easily obtained.

Fine dust is formed in the furnace and enters the PPP module with inlet gases 160. This fine dust is captured electrostatically in the tubes of the PPP module and moves downward through the tubes along with the batch particles.

Heated batch and captured pollutants exit the module through bottom hopper 142 and fill pipe 177. From pipe 177, material flows by gravity to charging machine 178, which is of conventional design. The charging machine is a mechanical feeder/distributor which controls the rate of addition of batch materials to the furnace. The feed rate of charging machine 178 is controlled to maintain an appropriate level of molten glass batch 154 inside of the furnace.

Compressed air supply (not shown) to the pneumatic injection nozzles 137 is controlled to provide batch injection rates to the tubes so that pipe 177 is maintained in a flooded condition, that is with the top level of heated batch somewhere inside of the pipe. In this way, hot batch is always available to the charging machine as required, and a pressure seal is maintained between the charging machine and the bottom hopper 142 of the PPP module. The pressure seal results from the pipe being filled with batch which prevents the inadvertent flow of exhaust gases through pipe 177.

The captured pollutants are returned to the glass melt 154 along with the heated batch, but fortunately they are typically normal constituents of the batch formulation. The formulation of the batch 168 delivered to the silo must be compensated accordingly to maintain the proper chemical input to the furnace. Thus the batch formulation which is delivered is different from that which would have been delivered if the PPP process were not utilised, the difference being the pollutant materials which would otherwise be allowed to leave the furnace and be discharged to the atmosphere.

Generally gases will flow through the PPP module by natural draught, that is the natural tendency of hot gases to rise. The ultimate discharge height of the integral stack 115 can be chosen to provide the necessary draught. Relationships between stack height, gas temperature and draught supplied are normal engineering calculations. In some cases, this natural draught might not be adequate, in which case two options exist. Cooling air 158 can be added to the flue channel via an ejector, which is common in the glass industry. Cooling air is injected at high velocity and in such a direction that its inertia boosts the flow of the exhaust gases. Alternatively, a fan can be added at some appropriate location in the exhaust gas flow system.

Other Application Examples

It can readily be seen that a multitude of processes could easily be adapted to operate advantageously with the PPP process. It is beyond the scope of this document to detail them all, but a person skilled in the art could design the details of the processes without difficulty, once the fundamental operation of the PPP process as set out herein is recognised and understood. It should therefore be realised that the possible applications of the PPP process are in no way limited to those specifically presented here, and some other possible applications will now be listed:

1. Exhaust gas cleaning form Hall-Heroult process aluminium smelting using alumina particles for HF adsorption
2. Particulate and HCl capture from municipal waste incinerator exhaust gases using limestone particles
3. Particulate and dioxine capture from municipal waste incinerator exhaust gases using activated carbon particles
4. Particulate and $SO_x$ capture from coal fired boiler exhaust gases using limestone particles, with PPP heat exchanger of condensing design
5. Capture of high resistivity particulate from exhaust gases in the burning of low sulphur coal using glass or other semi-insulating particles
6. Capture of high resistivity particulate from exhaust gases in metal smelting operations utilising glass or other semi-insulating particles.
7. Preheating or raw materials and particulate emission reduction from cement or limestone kilns.

**Claims**

1. A method for promoting contact between gases and solid particles comprising the steps of:

a) Providing an electrically conductive discharge electrode located adjacent to and spaced from an electrically conductive collection electrode, the discharge electrode generally including sharp or small radius surfaces conducive to production of corona discharge;
b) Introducing gases to the space between the electrodes;
c) Introducing solid particles to the space between the electrodes;
d) Applying an electric potential difference between the two electrodes of sufficient magnitude to produce corona discharge in the space between the two electrodes for a finite amount of time, to cause the particles to move toward the collection electrode;
e) Reducing the electric potential difference to a magnitude less than that required to produce corona discharge for a finite amount of time, to cause the particles to move away from the collection electrode;
f) Repeating steps d) and e) in an alternating fashion so that the particles are caused to move towards and away from the collection electrode, such motion enhancing their contact with the gases;
g) Removing gases from the space between the electrodes; and
h) Removing solid particles from the space between the electrodes.

2. A method according to claim 1 wherein:

a) the space has an elongated dimension that is substantially vertically oriented;
b) the particles are introduced at or near the top of the space;
c) the particles are removed at or near the bottom of the space; and wherein
d) the particles move by gravity in a substantially downward direction.

3. A method according to claim 2 wherein the gases are introduced at or near the bottom of the space and are removed at or near the top of the space so that the gases flow in a direction counter to the net flow direction of the particles.

4. A method according to claim 1, 2 or 3 wherein a plurality of the spaces are provided defined by a plurality of discharge and collection electrodes, the gases and particles each being divided to flow through the individual spaces.

5. A method according to any preceding claim wherein the reduced electric potential difference of step e) is less than that required to produce corona discharge and greater than 50% of that required to produce corona discharge.

6. A method according to any preceding claim wherein the time duration of step d) is between 0.1 and 10 seconds.

7. A method according to any preceding claim wherein the time duration of step e) is between 0.1 and 10 seconds.

8. A method according to any preceding claim wherein the time required for transition of electric potential difference from step d) to step e) is less than 1 millisecond.

9. A method according to any preceding claim wherein the solid particles are between 0.050 mm and 2 mm in size.

10. A method according to any preceding claim wherein the bulk electrical resistivity of a layer of the particles in situ in the gases is between $10^4$ $\Omega$-

meter and $10^{10}$ Ω-meter.

**11.** A method according to any preceding claim wherein the gases introduced to the space also contain entrained fine particulate matter, the process comprising the further steps of:

    a) electrostatically removing fine particulate matter from the gases such that gases removed from the space contain less fine particulate matter than the gases introduced to the space; and
    b) removing the fine particulate matter from the space along with the solid particles.

**12.** A method according to claim 11 wherein the bulk electrical resistivity of a layer of said fine particulate matter in situ in the gases is greater than the bulk electrical resistivity of a layer of said particles in situ in the gases.

**13.** A method according to claim 11 or 12 wherein the bulk electrical resistivity of a layer of said particulate matter in situ in the gases is greater than $10^8$ Ω-meter and the bulk electrical resistivity of a layer of said particles in situ in the gases is less than $10^8$ Ω-meter.

**14.** A method according to any preceding claim wherein the gases introduced to the space are at a different temperature than the particles introduced to the space and the contact between the gases and particles within the space results in transfer of heat between the gases and particles.

**15.** A method according to claim 14 wherein:

    a) the gases introduced to the space are of higher temperature than the particles introduced to the space;
    b) the particles introduced to the space include water;
    c) the water is evaporated in the space; and wherein
    d) the particles removed from the space include less water than the particles introduced to the space.

**16.** A method according to any preceding claim wherein:

    a) the gases introduced to the space between the discharge and collection electrodes contain a constituent substance that is chemically different from the bulk of the gases;
    b) the solid particles are at least partially comprised of a substance which is chemically reactive with the gaseous constituent substance, such reaction forming a solid product;
    c) the contact between gases and particles results in such chemical reaction;
    d) the gases removed from the space contain less of the constituent substance than the gases introduced to the space; and wherein
    e) the particles removed from the space include the solid reaction product

**17.** A method according to any of claims 1 to 15 wherein:

    a) the gases introduced to the space between the discharge and collection electrodes contain a constituent substance that is chemically different from the bulk of the gases;
    b) the solid particles are at least partially comprised of a substance which is capable of physically adsorbing the gaseous constituent substance onto its surface;
    c) the contact between gases and particles results in such physical adsorption;
    d) the gases removed from the space contain less of the constituent substance than the gases introduced to the space; and wherein
    e) the particles removed from the space include adsorbed molecules of gas constituent substance.

**18.** A method according to any of claims 1 to 15 wherein:

    a) The gases introduced to the space between the discharge and collection electrodes contain a constituent substance that is chemically reactive in the presence of a solid catalyst;
    b) The solid particles are at least partially comprised of the above mentioned catalyst substance; and wherein
    c) Contact between gases and particles results in such catalytic reaction.

**19.** A method according to claim 3 wherein the particles are introduced to the space between the discharge and collection electrodes a distance sufficiently below the top of the space that the gases removed from the space are substantially free of particles.

**20.** A method according to claim 2 or any of claims 3 to 19 when dependent on claim 2 wherein the vertically upward velocity of the gases in the space between the discharge and collection electrodes is of a magnitude sufficient to entrain at least some of the particles and carry them vertically upward in the absence of the applied electric potential difference.

**21.** A method according to any preceding claim comprising the further steps of:

a) providing a solid surface adjacent to the collection electrode and defining a space therebetween;

b) introducing a fluid to the space between the collection electrode and solid surface which is at a different temperature from the gases introduced to the space between discharge and collection electrodes, the fluid being either water, other liquids, air, or other gases;

c) transferring heat between the gases and the fluid with the particle motion augmenting the heat transfer rate; and

d) removing the fluid from the space between the two adjacent surfaces the removed fluid being at a temperature different from the fluid introduced to the space;

22. A method according to claim 21 wherein:

a) the gases introduced to the space between the discharge and collection electrodes are at least partially comprised of water vapour, the quantity of water vapour defining a dew point temperature below which water vapour condenses from the gases;

b) the gases introduced to the space between the discharge and collection electrodes also contain a constituent substance that is chemically different from the bulk of the gases;

c) the solid particles are at least partially comprised of a substance that is chemically reactive with the gas constituent substance, the chemical reactivity being enhanced by the presence of water, and such reaction forming a solid reaction product;

d) the fluid introduced to the space between the two adjacent surfaces is of a temperature tower than the dew point of the gases so that water is condensed on the surface of the collection electrode exposed to the gases;

e) water is transferred to surface of the particles by contact with the collection electrode;

f) the gas constituent substance is chemically reacted with the particle substance in the presence of water on the particles to form a solid product;

g) gases removed from the space contain less of the constituent substance than gases introduced to the space; and wherein

h) particles removed from the space between the discharge and collection electrodes include the solid reaction products.

23. A method according to claim 22 wherein water is condensed onto the surface of the particles directly from the gases.

24. A method according to claim 22 or 23 wherein the gaseous constituent substance is sulphur dioxide and the chemically reactive particle substance is limestone (calcium carbonate).

25. A method according to any preceding claim wherein the gases introduced to the space are glass melting furnace exhaust gases and the particles introduced to the space are glass batch materials, the method comprising the further step of introducing the particles removed from the space into the glass melting furnace.

26. A method according to claim 25 wherein heat is transferred from the gases to the particles in the space between the discharge and collection electrodes.

27. A method according to claim 22 wherein the gaseous constituent is sulphur dioxide, sulphur trioxide, hydrogen chloride or hydrogen fluoride and the particle substance is soda ash (sodium carbonate), limestone (calcium carbonate), quicklime (calcium oxide), or hydrated lime.

28. A method according to claim 25 wherein the glass batch materials contain moisture and comprising the further steps of:

a) Providing a solid surface adjacent to the collection electrode thereby defining a space between the collection electrode and the solid surface;

b) Introducing air to the space between the two adjacent surfaces;

c) Transferring heat from the furnace exhaust gases to the air, thus heating the air;

d) Removing heated air from the space between the two adjacent surfaces; and

e) Using the heated air to dry the glass batch materials, the drying occurring prior to the introduction of the glass batch materials to the space between the discharge and collection electrodes.

29. A method according to claim 28 wherein the drying is accomplished by direct contact of hot air with the glass batch materials and comprising the further step of introducing air from the drying process into the space between the discharge and collection electrodes.

30. Apparatus for promoting contact between gases and solid particles, comprising:

a) an electrically conductive discharge electrode located adjacent to an electrically conductive collection electrode, the discharge electrode generally including sharp or small radius surfaces conducive to production of corona discharge;

b) means for introducing gases to the space between the electrodes;

c) means for removing gases from the space between the electrodes;

d) means for introducing solid particles to the space between the electrodes;

e) means for removing solid particles from the space between the electrodes;

f) means for applying an electric potential difference between the two electrodes of sufficient magnitude to produce corona discharge in the space between the two electrodes, thereby causing the particles to move toward the collection electrode; and

g) means to reduce periodically the electric potential difference to a magnitude less than that required to produce corona discharge for a finite amount of time thereby causing the particles to move away from the collection electrode and then restore the electric potential to a magnitude sufficient to produce corona discharge.

31. Apparatus according to claim 30 wherein:

a) the space has an elongated dimension that in use is substantially vertically oriented;

b) the means for introduction of the particles is at or near the top of the space; and

c) the means for removal of the particles is at or near the bottom of the space

32. Apparatus according to claim 31 wherein the collection electrode is a tube and the discharge electrode is substantially concentric within the tube

33. Apparatus according to claim 32 wherein the tube is a circular cylinder of diameter between 50 mm and 500 mm.

34. Apparatus according to claim 32 or 33 wherein the discharge electrode is a wire of diameter between 0.5 mm and 6 mm.

35. Apparatus according to claim 31 wherein the discharge electrode is a bar with pointed protrusions.

36. Apparatus according to any of claims 30 to 35 further including a plurality of spaces defined by a plurality of discharge and collection electrodes and means to divide the gases and the particles so as to flow through the plurality of spaces.

37. Apparatus according to any of claims 30 to 36 further including a mechanically alternating spark gap device to produce the periodic reduction of electric potential difference.

38. Apparatus according to claim 31 wherein the means for introduction of the particles is positioned such that the particles are introduced to the space between the discharge and collection electrodes at a distance sufficiently below the top of the space that the gases removed from the space are substantially free of particles.

39. Apparatus according to claim 30 further including:

a) a solid surface adjacent to the collection electrode thereby defining a space between the collection electrode and the solid surface;

b) means to introduce a fluid to the space between the two adjacent surfaces; and

c) means to remove the fluid from the space between the two adjacent surfaces.

40. Apparatus according to claim 30 further including:

a) a solid surface adjacent to collection electrode thereby defining a space between the collection electrode and the solid surface;

b) means to introduce air to the space between the two adjacent surfaces;

c) means to remove the air from the space between the two adjacent surfaces; and

d) means to dry the particles using the removed air, the drying occurring prior to the introduction of the particles to the space between the discharge and collection electrodes.

41. Apparatus according to claim 40 wherein the drying means comprises direct contact between air and the particles and the apparatus further includes means to introduce the air from the drying process into the space between the discharge and collection electrodes.

FIG. 1A.

FIG. 1B.

SPARKOVER ✕

CURRENT DENSITY, J
(AMPERES / SQUARE METER)

Vt                                    Vs

ELECTRICAL POTENTIAL
DIFFERENCE, V (VOLTS)

FIG. 2

FIG. 3

FIG. 4A

FIG. 4B

V<Vt

3 41 20

47 43 44

46

2

23 8 1

## FIG. 5A

V<Vt

3 41 20 44

2

48 8 1

## FIG. 5B

FIG. 5C

FIG. 5D

FIG. 6

FIG 7A.

FIG 7B.

FIG 7C.

FIG 8A.

FIG 8B.

FIG 8C.

FIG 8D.

GAS VELOCITY, Ug
(METERS PER SECOND)

Uavg

0

90

63

88

91

89

RADIAL POSITION, R

0 Rw

Rt

## FIG. 9

3

61

62

92

93

94

99

98

97

96

95

1

## FIG. 10

FIG. 11A

FIG. 11B

FIG. 11C

FIG. 11D

FIG. 12

FIG. 13

FIG. 14

FIG. 15

**European Patent Office**

# EUROPEAN SEARCH REPORT

Application Number

EP 99 30 8244

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 94 06563 A (EDMESTON AB) 31 March 1994 (1994-03-31)<br><br>* page 10, line 28 - page 13, line 24 * | 1,11,16, 17, 25-27, 30,31 | B03C3/14 B03C3/145 B01D53/32 C03B3/02 B01J19/08 B01D53/08 |
| A | WO 98 25860 A (SANDVIK AKTIEBOLAG) 18 June 1998 (1998-06-18)<br><br>* page 5, line 10 - page 7, line 10 *<br>* page 9, line 9 - page 14, line 14 * | 1,2,11, 14,15, 25,26, 30,31 | B01D53/50 B01D53/68 B01D53/86 |
| A | US 4 338 113 A (HOHMAN ET AL) 6 July 1982 (1982-07-06)<br><br>* column 1, line 10 - column 3, line 29 * | 1,2,11, 14,16, 17, 25-27, 30-32 | |
| A | US 4 668 489 A (ALEXANDER ET AL) 26 May 1987 (1987-05-26)<br>* column 2, line 18 - column 7, line 42 * | 1,2,11, 16,17,30 | **TECHNICAL FIELDS SEARCHED (Int.Cl.7)**<br><br>B01D<br>B03C |
| A | US 5 609 736 A (YAMAMOTO) 11 March 1997 (1997-03-11)<br>* column 1, line 65 - column 4, line 67 *<br>* column 8, line 64 - column 9, line 35 * | 1,18,30 | B01J C03B |
| A | US 4 349 367 A (KRUMWIEDE) 14 September 1982 (1982-09-14)<br><br>* column 3, line 5 - column 7, line 35 * | 1,2,11, 14,25, 26,30-32 | |

The present search report has been drawn up for all claims

| Place of search | Date of completion of the search | Examiner |
|---|---|---|
| THE HAGUE | 13 December 1999 | Doolan, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 30 8244

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-1999

| Patent document cited in search report | | Publication date | Patent family member(s) | | | Publication date |
|---|---|---|---|---|---|---|
| WO 9406563 | A | 31-03-1994 | AT | 162960 | T | 15-02-1998 |
| | | | CA | 2145083 | A | 31-03-1994 |
| | | | DE | 69316905 | D | 12-03-1998 |
| | | | DE | 69316905 | T | 28-05-1998 |
| | | | EP | 0660752 | A | 05-07-1995 |
| | | | FI | 951303 | A | 10-05-1995 |
| | | | NO | 951067 | A | 22-05-1995 |
| | | | US | 5603910 | A | 18-02-1997 |
| | | | US | 5529762 | A | 25-06-1996 |
| WO 9825860 | A | 18-06-1998 | AU | 1560897 | A | 03-07-1998 |
| | | | EP | 0948464 | A | 13-10-1999 |
| US 4338113 | A | 06-07-1982 | NONE | | | |
| US 4668489 | A | 26-05-1987 | US | 4542000 | A | 17-09-1985 |
| US 5609736 | A | 11-03-1997 | US | 5843288 | A | 01-12-1998 |
| US 4349367 | A | 14-09-1982 | NONE | | | |